# EUROPÄISCHE PATENTSCHRIFT

(11) **EP 0 611 786 B1**
(45) Veröffentlichungstag und Bekanntmachung des Hinweises auf die Patenterteilung: **14.04.1999**
(21) Anmeldenummer: 94101699.0
(22) Anmeldetag: 04.02.1994
(51) Int. Cl.: C08G 77/38, C08F 246/00, G02F 1/1337

(54) **Orientierungsschicht für Flüssigkristalle**
Orientation layer for liquid crystals
Couche d'orientation pour cristaux liquides

(30) Priorität: 23.02.1993 CH 553/93; 17.02.1993 CH 488/93
(43) Veröffentlichungstag der Anmeldung: 24.08.1994
(73) Patentinhaber: Rolic AG, 6301 Zug (CH)
(72) Erfinder: Rolf, Peter, D-79100 Freiburg (DE); Kelly, Stephen, CH-4313 Möhlin (CH); Schadt, Martin, CH-4411 Seltisberg (CH); Schmitt, Klaus, D-79541 Lörrach (DE); Schuster, Andreas, D-79110 Freiburg (DE)
(74) Vertreter: England, Christopher David

(56) Entgegenhaltungen:
- EP-A- 0 240 276
- EP-A- 0 482 985
- EP-A- 0 525 477
- MACROMOLECULES. Bd. 18 , 1985 Seiten 2131 - 2135 T. NISHIKUBI 'study of photopolymers. 26. novel synthesis of self-photosensitive polymers by addition reactions of poly(glycidylmethacrylate) with nitroaryl cinnamate'
- DIE MACROMOLEKULARE CHEMIE Bd. 192 , 1991 Seiten 2801 - 2810 S.H.BARLEY 'the synthesis of siloxane-based polymers containing photoactive cinnamate moieties'
- JAPANESE JOURNAL OF APPLIED CHEMISTRY Bd. 31, Nr. 7 , 1992 Seiten 2155 - 2164 M. SCHADT ET AL. 'surface-induced parallel alignment of liquid crystals by linearly polymerized photopolymers'
- POLYMERS FOR ADVANCED TECHNOLOGIES Bd. 1 , 1990 Seiten 311 - 318 Y. KAWANISHI 'reversible alignment change of nematic liquid crystals by photochromic polymer films'

## Beschreibung

Die Erfindung betrifft neue lineare und cyclische Polymere oder Oligomere mit einer photoreaktiven Ethen-Gruppe zur Verwendung als Orientierungsschicht für Flüssigkristalle.

Die Ausrichtung von Flüssigkristall-Phasen in Zellen kann auf verschiedene Arten bewirkt werden, und erfolgt üblicherweise durch Reiben einer mit einer Polymerschicht beschichteten Glasplatte oder durch schräges Bedampfen einer Glasplatte mit einer SiOₓ Schicht. Auf diese Weise können hauptsächlich einheitlich ausgerichtete Schichten hergestellt werden.

Es ist jedoch auch möglich eine strukturierte Orientierung der Flüssigkristall-Phase zu erhalten. Dies kann beispielsweise dadurch erreicht werden, dass eine Glasplatte mit einem Polymer beschichtet wird, welchem zum Beispiel photochemisch orientierbare Farbstoffmoleküle oder photochemisch dimerisierbare Moleküle zugemischt werden, wie dies beispielsweise in EP-A-0 445 629 beschrieben ist. Diese Methoden sind jedoch nicht optimal, da einerseits die Löslichkeit solcher orientierbaren Moleküle im Polymer beschränkt ist, und andererseits die Stabilität auf die Dauer nicht in genügender Weise gewährleistet ist. Eine weitere Möglichkeit zur Herstellung von photochemisch orientierbaren Polymerschichten ist beispielsweise in Jpn. J. Appl. Phys. Vol. 31 (1992), 2155 beschrieben und besteht darin, dass freie Hydroxygruppen am Polymer mit dimerisierbaren Einheiten verestert werden. Ein Nachteil dieser Methode ist jedoch, dass die Veresterung der freien Hydroxygruppen am Polymer mit photochemisch dimerisierbaren Einheiten in der Regel zu einem nicht reproduzierbaren und vorallem zu einem unvollständigen Umsatz führt. Die in der Orientierungsschicht noch vorhandenen, freien Hydroxygruppen führen zu einer unerwünschten Ionenlöslichkeit.

In Macromolecules, Band 18, Seiten 2131-2135, (1985) wird ein neues Verfahren zur Herstellung von photosensitiven Polymeren beschrieben. Durch Addition von Nitroarylzimtsäureester an Epoxidgruppen von Polyglycidylmethacrylaten werden Polymere hergestellt, welche zwei Typen von Seitenketten enthalten, photosensible Reste wie Nitrophenyl, Nitronaphthyl oder Chlorphenyl und Zimtsäurereste. Durch die Art der Herstellung verbleiben freie Hydroxygruppen in der Hauptkette.

In Macromoleculare Chemie, Band 192, Seiten 2801-2810, (1991) werden copolymere Polysiloxanderivate mit einem niedrigen Prozentsatz an Zimtsäureester-Seitenketten beschrieben. Die Copolymere sind photoresistente Verbindungen und sollen deshalb einen möglichst kleinen Anteil an photoreaktiven Resten haben.

In der europäischen Patentanmeldung EPA-0 240 276 werden photopolymerisierbare flüssigkristalline Verbindungen mit einem Grundgerüst auf Basis einer Polyvinylkomponente und seitenständigen Einheiten auf der Basis Alkyl- oder Alkoxy-substituierter Zimtsäure beschrieben. Um die flüssigkristallinen Eigenschaften zu gewährleisten enthalten die Verbindungen lange flexible Spacer mit mindestens 7 Atomen und eine zusätzlich versteifende Einheit. Diese Verbindungen sind Verbindungen für Photoresist-Anwendungen. Sie eignen sich nicht als Orientierungsschichten für Flüssigkristalle.

Die in der europäischen Patentanmeldung EPA-0 525 477 beschriebenen Polyvinylester der Paramethoxyzimtsäure zur Herstellung von Orientierungsschichten sind nicht Teil der vorliegenden Erfindung.

Es stellte sich daher die Aufgabe, eine Orientierungsschicht zu finden, welche die obengenannten Nachteile nicht mehr aufweist.

Die Erfindung betrifft Homopolymere der allgemeinen Formel I-A:

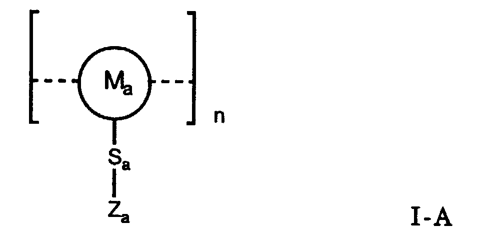

Die Spacer-Einheit Sₐ verbindet die Isomerisierungs-/Dimerisierungs-Einheit (Zₐ) mit der Monomer-Einheit (Mₐ). Solche Spacer-Einheiten sind an und für sich bekannt. Im vorliegenden Fall bedeutet der Ausdruck "Spacer-Einheit" Sa Methylen, 1,2-Ethylen, 1,3-Propylen, 1,4-Butylen, 1,2-Propylen, 1,3-Butylen, Cyclopentan-1,2-diyl, Cyclopentan-1,3-diyl, Cyclohexan-1,3-diyl, Cyclohexan-1,4-diyl, Piperidin-1,4-diyl, Piperazin-1,4-diyl, 1,2-Phenylen, 1,3-Phenylen, 1,4-Phenylen, Ethylenoxy, Ethylenoxycarbonyl, Ethylencarboxyl, -CONH-.

Die Isomeriserungs-/Dimerisierungs-Einheit Zₐ ist eine Molekül-Einheit, die entweder photochemische cis/trans-Isomerisierung, und photochemische [2+2] Cycloaddition eingehen kann und damit zu einer Vernetzung der Polymere bzw. Oligomere führt. Die Isomerisierungs-/ Dimerisierungs-Einheit Zₐ ist wie bereits erwähnt über den Spacer Sₐ an die Monomer-Einheit Mₐ, gebunden und hat die allgemeine Formel:

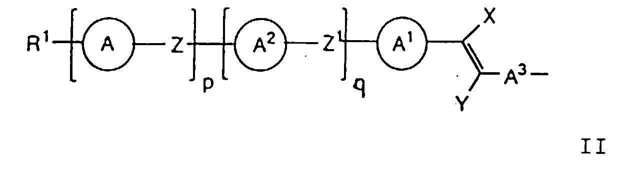

In der Formel II bedeuten:
- Ring A¹: unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, 1,4- oder 2,6-Naphthylen, in welchem eine CH-Gruppe durch Stickstoff ersetzt sein kann;
- Ring A, A²: unabhängig voneinander unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, trans-1,4-Cyclohexylen, trans-1,3-Dioxan-2,5-diyl oder 1,4-Piperidyl;
- A³: -COO-, -CONH-, -CO-E-, unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, 1,4- oder 2,6-Naphthylen, in welchem eine CH-Gruppe durch Stickstoff ersetzt sein kann;
- E: unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, 1,4- oder 2,6-Naphthylen, in welchem eine CH-Gruppe durch Stickstoff ersetzt sein kann;
- Z, Z¹: unabhängig voneinander eine einfache Kovalenzbindung, -CH₂CH₂-, -COO-, -OOC-, -OCH₂-, -CH₂O-, -C≡C-, -(CH₂)₄-, -O(CH₂)₃-, -(CH₂)₃O- oder die trans-Form von -OCH₂CH=CH-, -CH=CHCH₂O-, -(CH₂)₂CH=CH- oder -CH=CH(CH₂)₂-;
- R¹: Wasserstoff, Halogen, Cyano, Nitro, NCS, gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, -OOC-, -CO- und/oder eine -CH₂CH₂-Gruppe durch -CH=CH- ersetzt sein können;
- q, p: unabhängig voneinander 0 oder 1;
- X,Y: unabhängig voneinander Wasserstoff, Halogen, Cyano, gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, -OOC-, -CO- und/oder -CH=CH- ersetzt sein können.

Die Isomerisierungs-/Dimerisierungs-Einheiten der allgemeinen Formel II, deren Ethen-Gruppe unter den Polymerisationsbedingungen nicht, oder nur zu einem geringen Teil in das Polymer eingebaut wird, können nach der Auftragung der Polymerschicht auf einen Träger durch Bestrahlung mit linear polarisiertem Licht selektiv ausgerichtet werden. Dies geschieht entweder durch Isomerisierung der Ethen-Gruppe, durch Dimerisierung der Ethen-Gruppe, oder aber durch gleichzeitige Isomerisierung und Dimerisierung dieser Ethen-Gruppe. Durch die selektive Bestrahlung der Molekül-Einheiten der Formel II können nun ganz bestimmte Bereiche einer Oberfläche ausgerichtet werden, welche durch die Dimerisierung gleichzeitig auch stabilisiert werden.

Der in der Formel II verwendete Ausdruck "unsubstituiertes oder mit Halogen, Cyano und/oder Nitro substituiertes 1,4-Phenylen, in welchem 1 oder 2 CH-Gruppen durch Stickstoff ersetzt sein können" umfasst im Rahmen der vorliegenden Anmeldung 1,4-Phenylen, 2-Fluor-1,4-phenylen, 2,3-Difluor-1,4-phenylen, 2,6-Difluor-1,4-phenylen, 2-Chlor-1,4-phenylen, 2,3-2,6-Dichlor-1,4-phenylen, 2,6-Dichlor-1,4-phenylen, 2-Cyano-1,4-phenylen, 2,3-Dicyano-1,4-phenylen, 2-Nitro-1,4-phenylen, 2,3-Dinitro-1,4-phenylen, 2-Brom-1,4-phenylen, 2-Methyl-1,4-phenylen, sowie Pyridin-2,5-diyl, Pyrimidin-2,5-diyl und dergleichen. Besonders bevorzugt sind 1,4-Phenylen, 2-Fluor-1,4-phenylen, 2,3-Difluor-1,4-phenylen, 2,6-Difluor-1,4-phenylen, Pyridin-2,5-diyl oder Pyrimidin-2,5-diyl.

Der Ausdruck "1,4- oder 2,6-Naphthylen, in welchem eine CH-Gruppe durch Stickstoff ersetzt sein kann" umfasst im Rahmen der vorliegenden Erfindung 1,4-Naphthylen, 2,6-Naphthylen, 1-Benzazin-2,6-diyl und 2-Benzazin-1,4-diyl.

Der Ausdruck "gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, -OOC-, -CO- und/oder eine -CH₂CH₂-Gruppe durch -CH=CH- ersetzt sein können" umfasst im Rahmen der vorliegenden Erfindung umfasst geradkettige und verzweigte (gegebenenfalls chirale) Reste wie Alkyl, Alkenyl, Alkoxy, Alkenyloxy Alkoxyalkyl, Alkenyloxyalkyl, Alkoxyalkenyl, 1-Fluoralkyl, 1,1-Difluoralkyl, 2-Fluoralkyl, 2-Fluoralkoxy, endständiges Fluoralkyl, endständiges Difluormethylalkyl, endständiges Trifluormethylalkyl, endständiges Trifluormethylalkoxy, und dergleichen mit 1 bzw. 2 bis 12 Kohlenstoffatomen. Beispiele bevorzugter Reste sind Methyl, Ethyl, Propyl, Butyl, Pentyl, Hexyl, Heptyl, Octyl, 1-Methylpropyl, 1-Methylheptyl, 2-Methylbutyl, 3-Methylpentyl, Vinyl, 1E-Propenyl, 1E-Butenyl, lE-Pentenyl, 1E-Hexenyl, 3-Butenyl, 3E-Pentenyl, 3E-Hexenyl, 4-Pentenyl, 4Z-Hexenyl, 5-Hexenyl, 6-Heptenyl, 7-Octenyl, Methoxy, Ethoxy, Propyloxy, Butyloxy, Pentyloxy, Hexyloxy, Heptyloxy, Octyloxy, 1-Methylpropyloxy, 1-Methylheptyloxy, 2-Methylbutyloxy, Allyloxy, 2E-Butenyloxy, 2E-Pentenyloxy, 3-Butenyloxy, 3Z-Pentenyloxy, 4-Pentenyloxy, 5-Hexenyloxy, 6-Heptenyloxy, 7-Octenyloxy, 2-Methoxyethyl, 3-Methoxypropyl, 3-Methoxy-1E-propenyl, 1-Fluorpropyl, 1-Fluorpentyl, 2-Fluorpropyl, 2,2-Difluorpropyl, 3-Fluorpropyl, 3,3-Difluorpropyl, 3,3,3-Trifluorpropyl, 2-Fluorpropyloxy, 3-Fluorpropyloxy, 2,2-Difluorvinyl, 2-(3,3-Difluor)propenyl und dergleichen. Besonders bevorzugte Reste haben 1 bzw. 2 bis 6 Kohlenstoffatome.

Der Ausdruck "Halogen" bezeichnet im Rahmen der vorliegenden Erfindung Fluor, Chlor, Brom und Iod, insbesondere jedoch Fluor und Chlor.

Bevorzugte Isomerisierungs-/Dimerisierungs-Einheiten der allgemeinen Formeln II sind 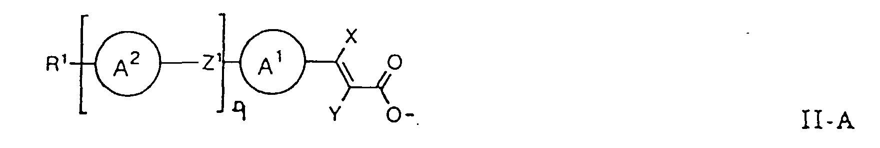 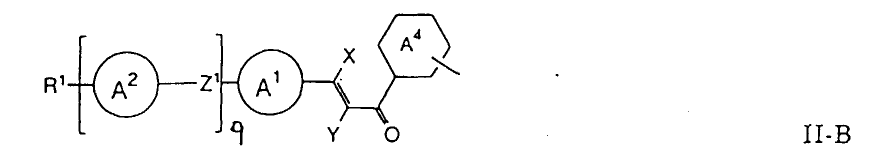 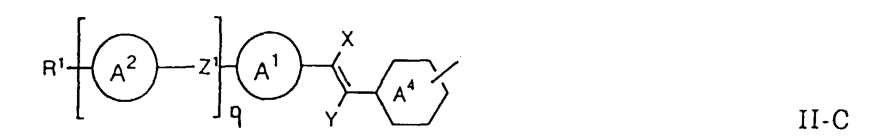 in den Formeln II-A, II-B und II-C bedeuten
- Ring A¹: unsubstituiertes oder mit Halogen, Cyano und/oder Nitro substituiertes 1,4-Phenylen, oder Pyrimidin-2,5-diyl, Pyridin-2,5-diyl, 2,5-Thiophendiyl, 2,5-Furanylen, 1,4-Naphthylen oder 2,6-Naphthylen;
- Ring A²: unsubstituiertes oder mit Halogen, Cyano und/oder Nitro substituiertes 1,4-Phenylen, oder Pyrimidin-2,5-diyl, Pyridin-2,5-diyl, 2,5-Thiophendiyl, 2,5-Furanylen, trans-1,4-Cyclohexylen, trans-1,3-Dioxan-2,5-diyl oder 1,4-Piperidyl;
- Ring A⁴: unsubstituiertes oder mit Halogen, Cyano und/oder Nitro substituiertes 1,4-Phenylen;
- Z¹: eine einfache Kovalenzbindung, -CH₂CH₂-, -COO-, -OCH₂-, -(CH₂)₄-, -O(CH₂)₃- oder -(CH₂)₃O-;
- R¹: Wasserstoff, Halogen, Cyano, Nitro, gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, und/oder eine -CH₂CH₂-Gruppe durch -CH=CH- ersetzt sein können;
- q: 0 oder 1 ist;
- X: Wasserstoff oder gegebenenfalls mit Halogen substituiertes Alkyl mit 1 bis 6 Kohlenstoffatomen;
- Y: Wasserstoff, Cyano, -COO-Alkyl, gegebenenfalls mit Fluor substituiertes Alkyl mit 1 bis 6 Kohlenstoffatomen.

Bevorzugte Verbindungen der allgemeinen Formeln II-A bis II-C sind diejenigen, worin X Wasserstoff und Y Wasserstoff, Cyano oder gegebenenfalls mit Fluor substituiertes Alkyl mit 1 bis 6 Kohlenstoffatomen bedeuten; insbesondere sind jedoch diejenigen bevorzugt, worin X und Y Wasserstoff darstellen.

Ganz besonders bevorzugte Isomerisierungs-/Dimerisierungs-Einheiten sind diejenigen der allgemeinen Formel II-A, wie beispielsweise 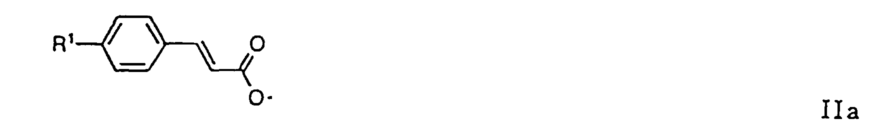 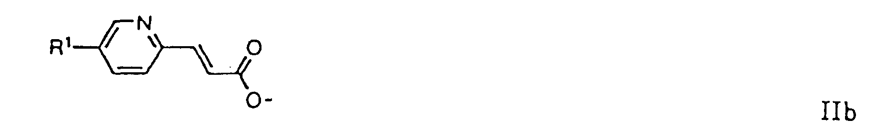 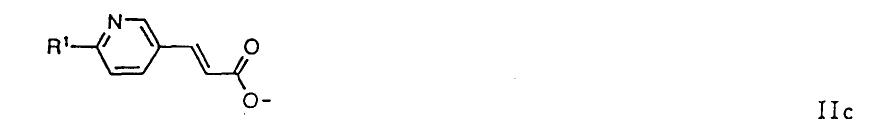 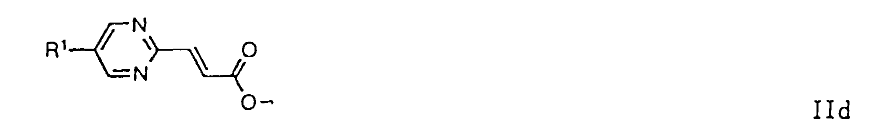 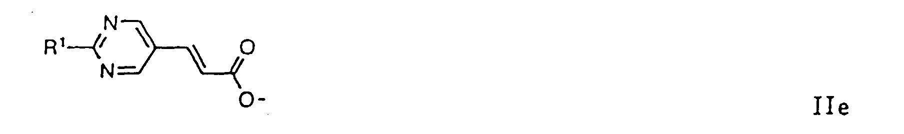 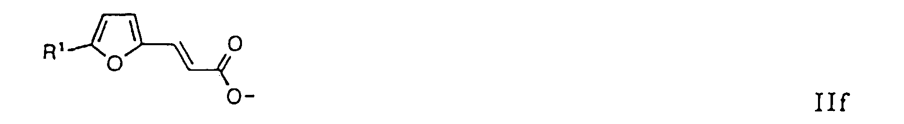 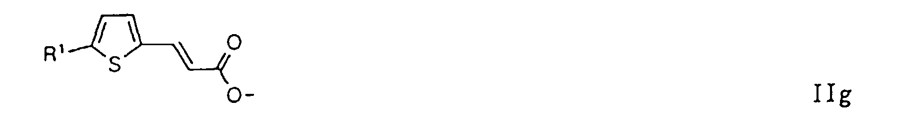 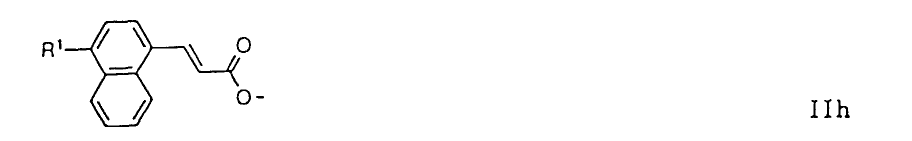 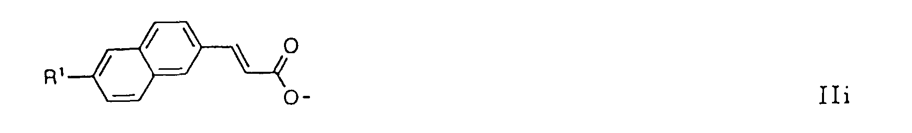 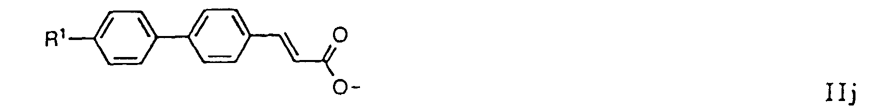 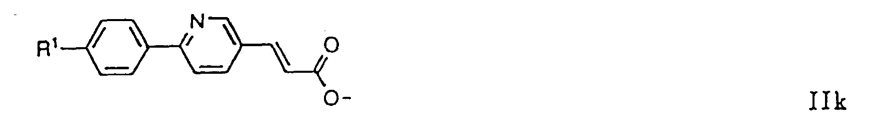 worin R¹ Wasserstoff, Halogen, Cyano, Nitro, Alkyl oder Alkoxy mit 1 bis 6 Kohlenstoffatomen.

Die Polymere der Formel I zeichnen sich dadurch aus, dass sie einfach zugänglich sind. Die Monomere werden zunächst aus den einzelnen Bestandteilen, d.h. aus der Isomerisierungs-/Dimerisierungs-Einheit der Formel II, dem Spacer (Sₐ), und den polymerisierbaren Teil (Mₐ) zusammengesetzt. Die Bildung der Polymere erfolgt anschliessend in an sich bekannter Weise. Die Polymerisation kann beispielsweise in der Schmelze oder aber in Lösung unter Sauerstoffausschluss und in Anwesenheit eines Radikal-Initiators, der thermisch, photochemisch oder durch eine Redox-Reaktion Radikale generieren kann, erfolgen. Die Reaktion kann in einem Temperatur-Bereich von -10°C bis 120°C, vorzugsweise in einem Bereich von 20°C bis 100°C erfolgen.

Zur Herstellung von Polymerschichten in selektiv flächig begrenzten Bereichen kann beispielsweise zunächst eine Lösung des erhaltenen Polymermaterials hergestellt werden, welche in einer Spin-Coating-Apparatur auf einem, mit einer Elektrode beschichteten, Träger (z.B. mit Indium-Zinn-Oxid (ITO) beschichtete Glasplatte) aufgeschleudert wird, so dass homogene Schichten von 0,05 - 50 µm Dicke entstehen. Gleichzeitig können die zu isomerisierenden und dimerisierenden (zu vernetzenden) Bereiche z.B. mit einer Quecksilber-Hochdruck-Lampe, einer Xenonlampe oder einem gepulsten UV-Laser unter Verwendung eines Polarisators und gegebenenfalls einer Maske zur Abbildung von Strukturen belichtet werden. Die Belichtungsdauer ist abhängig von der Leistung der einzelnen Lampen und kann von wenigen Minuten bis zu mehreren Stunden variieren. Die Vernetzung kann aber auch durch Bestrahlung der homogenen Schicht unter Verwendung von Filtern, die z.B. nur die für die Vernetzungsreaktion geeignete Strahlung hindurchlassen, erfolgen.

Die erfindungsgemässen Polymere werden durch die folgenden Beispiele weiter veranschaulicht. In den nachstehenden Beispielen bedeutet Tg die Glastemperatur, Δcₚ die Aenderung der spezifischen Wärmekapazität bei konstantem Druck, ΔH die Umwandlungsenthalpie, log Iₒ/I die Extinktion, ε den molaren dekadischen Absorptionskoeffizienten, C eine kristalline, S eine smektische, N eine nematische und I die isotrope Phase.

### Beispiel 1

1g Methacryloyloxyethyl-3-(E)-[4-pentyl-4'-biphenyl]acrylat und 0,002 g Azobisisobutyronitril wurden in 4 ml Tetrahydrofuran gelöst. Die Lösung wurde 10 Min. lang mit einem schwachen Stickstoffstrom durchspült, und anschliessend wurde das Reaktionsgefäss luftdicht verschlossen. Die Lösung wurde 24 Stunden auf 60 °C erhitzt. Danach wurde das Reaktionsgefäss geöffnet und die Lösung unter Rühren mit 5 ml Tetrahydrofuran verdünnt. Anschliessend wurde die verdünnte Lösung unter Rühren bei Raumtemperatur in 450 ml Diethylether getropft. Das ausgefallene Polymer wurde abfiltriert, getrocknet, in 30 ml Dichlormethan gelöst und diese Lösung in 450 ml Diethylether getropft. Dieser Vorgang wurde weitere zweimal wiederholt. Nach Filtrieren und Trocknen bei 50 °C im Vakuum ergab dies 0,4 g Poly-(methacryloyloxyethyl-3-(E)-[4-pentyl-4'-biphenyl]acrylat), Tg. 123 °C, Klp. (S-I) 160 °C;

Das als Ausgangsmaterial verwendete Methacryloyloxyethyl-3-(E)-4-pentyl-4'-biphenylacrylat wurde wie folgt hergestellt:
(a). Eine Lösung von 10 g 4-Pentyl-4'-cyanobiphenyl in 150 ml Toluol wurde unter Stickstoffbegasung bei 0°C tropfenweise mit 65 ml einer 1 M Lösung von Diisobutylaluminiumhydrid in Toluol versetzt. Das Reaktionsgemisch wurde über Nacht bei Raumtemperatur gerührt, dann tropfenweise mit 340 ml 1N Schwefelsäure versetzt, 1 Stunde bei Raumtemperatur gerührt, auf 1,000 ml Wasser gegossen und dann dreimal mit je 100 ml Ethylacetat extrahiert. Die vereinigten organischen Phasen wurden zweimal mit je 50 ml gesättigter Kochsalz-Lösung gewaschen, über Magnesiumsulfat getrocknet, filtriert und anschliessend eingeengt. Chromatographische Reinigung des Rückstandes an Kieselgel mit Hexan/Ethylacetat (Vol. 9:1) ergab 10,1 g 4-Pentyl-4'-biphenylcarboxaldehyd.
(b). Ein Gemisch von 11,9 g Phosphonoessigsäure-P,P-diethyl-trimethylsilylester in 370 ml absolutem Tetrahydrofuran wurde bei 0 °C und unter Stickstoffbegasung vorgelegt und dann tropfenweise mit 27,7 ml einer 1,6 M Lösung von Butyllithium in Hexan versetzt. Das Reaktionsgemisch wurde 2 Stunden bei Raumtemperatur gerührt, dann mit einer Lösung aus 10,1 g 4-Pentyl-4'-biphenylcarboxaldehyd und 15 ml absolutem Tetrahydrofuran versetzt, noch 1,5 Stunden bei Raumtemperatur gerührt, auf 100 ml Wasser gegossen und dann dreimal mit je 50 ml Ethylacetat extrahiert. Die vereinigten organischen Phasen wurden zweimal mit je 50 ml gesättigter Kochsalz-Lösung gewaschen, über Magnesiumsulfat getrocknet, filtriert und anschliessend eingeengt. Zweimaliges Umkristallisieren des Rohproduktes aus Ethylalkohol ergab 17,0 g 3-(E)-[4-Pentyl-4'-biphenyl]acrylsäure, Smp. (C-N) 209°C und Klp. (N-I) 284°C (Zersetzung).
(c). Zu einer Lösung von 5,4 g 2-Hydroxyethylmethacrylat, 11,6 g 3-(E)-[4-Pentyl-4'-biphenyl]acrylsäure und 1,21 g 4-(Dimethylamino)pyridin in 300 ml Tetrahydrofuran wurde unter Rühren bei 0°C innert 15 Minuten 9,4 g N,N'-Dicyclohexylcarbodiimid gegeben. Das Reaktionsgemisch wurde über Nacht bei Raumtemperatur weitergerührt, dann filtriert, das Filtrat auf Wasser gegossen und dreimal mit je 50 ml Ethylacetat extrahiert. Die vereinigten organischen Phasen wurden zweimal mit je 50 ml gesättigter Kochsalz-Lösung gewaschen, über Magnesiumsulfat getrocknet, filtriert und anschliessend eingeengt. Chromatographische Reinigung des Rückstandes an Kieselgel mit Hexan/Ethylacetat (Vol. 9:1) und zweimaliges Umkristallisieren der gemäss Dünnschichtchromatographie reinen Fraktionen aus Ethylalkohol ergab 4,5 g Methacryloyloxyethyl-3-(E)-[4-pentyl-4'-biphenyl]acrylat, Smp. 72 °C.

In analoger Weise können folgende Verbindungen hergestellt werden:
Poly(methacryloyloxyethyl-3-(E)-[4-methyl-4'-biphenyl]acrylat);
Poly(methacryloyloxyethyl-3-(E)-[4-ethyl-4'-biphenyl]acrylat);
Poly(methacryloyloxyethyl-3-(E)-[4-propyl-4'-biphenyl]acrylat);
Poly(methacryloyloxyethyl-3-(E)-[4-butyl-4'-biphenyl]acrylat);
Poly(methacryloyloxyethyl-3-(E)-[4-hexyl-4'-biphenyl]acrylat);
Poly(methacryloyloxyethyl-3-(E)-[4-heptyl-4'-biphenyl]acrylat);
Poly(methacryloyloxyethyl-3-(E)-[4-octyl-4'-biphenyl]acrylat);
Poly(methacryloyloxypropyl-3-(E)-[4-pentyl-4'-biphenyl]acrylat);
Poly(methacryloyloxybutyl-3-(E)-[4-pentyl-4'-biphenyl]acrylat);
Poly(methacryloyloxyethyl-3-(E)-[4-methyloxy-4'-biphenyl]acrylat);
Poly(methacryloyloxyethyl-3-(E)-[4-ethoxy-4'-biphenyl]acrylat);
Poly(methacryloyloxyethyl-3-(E)-[4-propyloxy-4'-biphenyl]acrylat);
Poly(methacryloyloxyethyl-3-(E)-[4-ethoxy-4'-biphenyl]acrylat);
Poly(methacryloyloxyethyl-3-(E)-[4-hexyloxy-4'-biphenyl]acrylat);
Poly(methacryloyloxyethyl-3-(E)-[4-heptyloxy-4'-biphenyl] acrylat);
Poly(methacryloyloxyethyl-3-(E)-[4-octyloxy-4'-biphenyl]acrylat), Tg. 106°C, Klp. (S-I) 170 °C;
Poly(methacryloyloxypropyl-3-(E)-[4-octyloxy-4'-biphenyl]acrylat);
Poly(methacryloyloxybutyl-3-(E)-[4-octyloxy-4'-biphenyl]acrylat);
Poly(methacryloyloxyethyl-3-(E)-[4-cyano-4'-biphenyl]acrylat), Tg. 134 °C;
Poly(methacryloyloxypropyl-3-(E)-[4-cyano-4'-biphenyl]acrylat);
Poly(methacryloyloxybutyl-3-(E)-[4-cyano-4'-biphenyl]acrylat);
Poly(methacryloyloxypentyl-3-(E)-[4-octyloxy-4'-biphenyl]acrylat);
Poly(methacryloyloxyethyl-3-(E)-[4-(trans-4-methylcyclohexyl)phenyl]acrylat);
Poly(methacryloyloxyethyl-3-(E)-[4-(trans-4-ethylcydohexyl)phenyl]acrylat);
Poly(methacryloyloxyethyl-3-(E)-[4-(trans-4-propylcyclohexyl)phenyl]acrylat), Tg. 88°C;
Poly(methacryloyloxyethyl-3-(E)-[4-(trans-4-butylcyclohexyl)phenyl]acrylat);
Poly(methacryloyloxyethyl-3-(E)-[4-(trans-4-pentylcyclohexyl)phenyl]acrylat);
Poly(methacryloyloxyethyl-3-(E)-[4-(trans-4-hexylcydohexyl)phenyl]acrylat);
Poly(methacryloyloxyethyl-3-(E)-[4-(trans-4-heptylcyclohexyl)phenyl]acrylat);
Poly(methacryloyloxypropyl-3-(E)-[4-(trans-4-pentylcyclohexyl)phenyl]acrylat);
Poly(methacryloyloxybutyl-3-(E)-[4-(trans-4-pentylcyclohexyl)phenyl]acrylat);
Poly(methacryloyloxyethyl-3-(E)-biphenylacrylat), Tg = 98 °C;
Poly(methacryloyloxypropyl-3-(E)-biphenylacrylat);
Poly(methacryloyloxyethyl-3-(E)-phenylacrylat), Tg = 60 °C;
Poly(methacryloyloxyethyl-3-(E)-[4-methylphenyl]acrylat);
Poly(methacryloyloxyethyl-3-(E)-[4-ethylphenyl]acrylat);
Poly(methacryloyloxyethyl-3-(E)-[4-methoxyphenyl]acrylat), Tg = 69 °C;
Poly(methacryloyloxyethyl-3-(E)-[4-ethoxyphenyl]acrylat);
Poly(methacryloyloxypropyl-3-(E)-[4-methylphenyl]acrylat);
Poly(methacryloyloxypropyl-3-(E)-[4-ethylphenyl]acrylat);
Poly(methacryloyloxypropyl-3-(E)-[4-methoxyphenyl]acrylat);
Poly(methacryloyloxypropyl-3-(E)-[4-ethoxyphenyl]acrylat);
Poly(methacryloyloxyethyl-3-(E)-[3-cyanophenyl]acrylat);
Poly(methacryloyloxypropyl-3-(E)-[3-cyanophenyl]acrylat);
Poly(methacryloyloxyethyl-3-(E)-[4-cyanophenyl]acrylat), Tg = 105 °C;
Poly(methacryloyloxypropyl-3-(E)-[4-cyanophenyl]acrylat);
Poly(methacryloyloxyethyl-3-(E)-[3-nitrophenyl]acrylat);
Poly(methacryloyloxypropyl-3-(E)-[3-nitrophenyl]acrylat);
Poly(methacryloyloxyethyl-3-(E)-[4-nitrophenyl]acrylat), Tg = 106 °C;
Poly(methacryloyloxypropyl-3-(E)-[4-nitrophenyl]acrylat);
Poly(methacryloyloxyethyl-3-(E)-[3-chlorophenyl]acrylat);
Poly(methacryloyloxypropyl-3-(E)-[3-chlorophenyl]acrylat);
Poly(methacryloyloxyethyl-3-(E)-[4-chlorophenyl]acrylat), Tg = 72 °C;
Poly(methacryloyloxypropyl-3-(E)-[4-chlorophenyl]acrylat);
Poly(methacryloyloxyethyl-3-(E)-[3-fluorophenyl]acrylat);
Poly(methacryloyloxyethyl-3-(E)-[4-fluorophenyl]acrylat);
Poly(methacryloyloxypropyl-3-(E)-[4-fluorophenyl]acrylat);
Poly(methacryloyloxyethyl-3-(E)-[2,4-di-methylphenyl]acrylat);
Poly(methacryloyloxypropyl-3-(E)-[2,4-di-methylphenyl]acrylat);
Poly(methacryloyloxyethyl-3-(E)-[2,3-di-methoxyphenyl]acrylat);
Poly(methacryloyloxyethyl-3-(E)-[2,4-di-methoxyphenyl]acrylat);
Poly(methacryloyloxypropyl-3-(E)-[2,4-di-methoxyphenyl]acrylat);
Poly(methacryloyloxyethyl-3-(E)-[3,4-di-methoxyphenyl]acrylat);
Poly(methacryloyloxypropyl-3-(E)-[3,4-di-methoxyphenyl]acrylat);
Poly(methacryloyloxyethyl-3-(E)-[3,5-di-methoxyphenyl]acrylat);
Poly(methacryloyloxypropyl-3-(E)-[3,5-di-methoxyphenyl]acrylat);
Poly(methacryloyloxyethyl-3-(E)-[3,4-di-cyanophenyl]acrylat);
Poly(methacryloyloxypropyl-3-(E)-[3,4-di-cyanophenyl]acrylat);
Poly(methacryloyloxyethyl-3-(E)-[3,5-di-cyanophenyl]acrylat);
Poly(methacryloyloxypropyl-3-(E)-[3,5-di-cyanophenyl]acrylat);
Poly(methacryloyloxyethyl-3-(E)-[2,4-di-nitrophenyl]acrylat);
Poly(methacryloyloxypropyl-3-(E)-[2,4-di-nitrophenyl]acrylat);
Poly(methacryloyloxyethyl-3-(E)-[3,4-di-chlorophenyl]acrylat);
Poly(methacryloyloxypropyl-3-(E)-[3,4-di-chlorophenyl]acrylat);
Poly(methacryloyloxyethyl-3-(E)-[3,5-di-chlorophenyl]acrylat);
Poly(methacryloyloxypropyl-3-(E)-[3,5-di-chlorophenyl]acrylat);
Poly(methacryloyloxyethyl-3-(E)-[3,4-di-fluorophenyl]acrylat);
Poly(methacryloyloxypropyl-3-(E)-[3,4-di-fluorophenyl]acrylat);
Poly(methacryloyloxyethyl-3-(E)-[3,5-di-fluorophenyl]acrylat);
Poly(methacryloyloxypropyl-3-(E)-[3,5-di-fluorophenyl]acrylat);
Poly(methacryloyloxyethyl-3-(E)-[3-bromo-4-fluoro-phenyl]acrylat);
Poly(methacryloyloxypropyl-3-(E)-[3-bromo-4-fluoro-phenyl]acrylat);
Poly(methacryloyloxyethyl-3-(E)-[5-bromo-2-methoxy-phenyl]acrylat);
Poly(methacryloyloxyethyl-3-(E)-[4-chloro-3-nitro-phenyl]acrylat);
Poly(methacryloyloxypropyl-3-(E)-[4-chloro-3-nitro-phenyl]acrylat);
Poly(methacryloyloxyethyl-3-(E)-[2-chloro-4-fluoro-phenyl]acrylat);
Poly(methacryloyloxypropyl-3-(E)-[2-chloro-4-fluoro-phenyl]acrylat);
Poly(methacryloyloxyethyl-3-(E)-[3-chloro-4-fluoro-phenyl]acrylat);
Poly(methacryloyloxypropyl-3-(E)-[3-chloro-4-fluoro-phenyl]acrylat);
Poly(methacryloyloxyethyl-3-(E)-[3-fluoro-2-methyl-phenyl]acrylat);
Poly(methacryloyloxypropyl-3-(E)-[3-fluoro-2-methyl-phenyl]acrylat);
Poly(methacryloyloxyethyl-3-(E)-[4-trifluoromethylphenyl]acrylat);
Poly(methacryloyloxypropyl-3-(E)-[4-trifluoromethylphenyl]acrylat);
Poly(methacryloyloxyethyl-3-(E)-[4-trifluoromethoxyphenyl]acrylat);
Poly(methacryloyloxypropyl-3-(E)-[4-trifluoromethoxyphenyl] acrylat);
Poly(acryloyloxyethyl-3-(E)-biphenylacrylat);
Poly(2-chloroacryloyloxyethyl-3-(E)-[4-methylphenyl]acrylat);
Poly(acryloyloxyethyl-3-(E)-[4-methoxyphenyl]acrylat);
Poly(acryloyloxypropyl-3-(E)-[4-ethoxyphenyl]acrylat);
Poly(acryloyloxyethyl-3-(E)-[3-cyanophenyl]acrylat);
Poly(acryloyloxypropyl-3-(E)-[4-cyanophenyl]acrylat);
Poly(2-chloroacryloyloxyethyl-3-(E)-[3-nitrophenyl]acrylat);
Poly(acryloyloxyethyl-3-(E)-[4-nitrophenyl]acrylat);
Poly(acryloyloxybutyl-3-(E)-[3-chlorophenyl]acrylat);
Poly(acryloyloxyethyl-3-(E)-[4-chlorophenyl]acrylat);
Poly(acryloyloxyethyl-3-(E)-[3-fluorophenyl]acrylat);
Poly(acryloyloxyethyl-3-(E)-[2,4-di-methylphenyl]acrylat);
Poly(acryloyloxyethyl-3-(E)-[3,4-di-methoxyphenyl]acrylat);
Poly(acryloyloxyethyl-3-(E)-[3,5 di-methoxyphenyl]acrylat);
Poly(2-chloroacryloyloxypropyl-3-(E)-[3,4-cyanophenyl]acrylat);
Poly(acryloyloxyethyl-3-(E)-[3,5-di-cyanophenyl]acrylat);
Poly(acryloyloxybutyl-3-(E)-[2,4-di-nitrophenyl]acrylat);
Poly(acryloyloxyethyl-3-(E)-[3,5-di-chlorophenyl]acrylat);
Poly(acryloyloxyethyl-3-(E)-[3,4-di-fluorophenyl]acrylat);
Poly(acryloyloxypropyl-3-(E)-[3,5-di-fluorophenyl]acrylat);
Poly(acryloyloxyethyl-3-(E)-[4-chloro-3-nitro-phenyl]acrylat);
Poly(2-chloroacryloyloxypropyl-3-(E)-[2-chloro-4-fluoro-phenyl]acrylat);
Poly(acryloyloxyethyl-3-(E)-[3-chloro-4-fluoro-phenyl]acrylat);
Poly(acryloyloxyethyl-3-(E)-[4-trifluoromethylphenyl]acrylat);
Poly(acryloyloxyethyl-3-(E)-[4-trifluoromethylphenyl]acrylat);
Poly(acryloyloxyethyl-3-(E)-[4-trifluoromethoxyphenyl]acrylat).

### Beispiel 2

1,5 g 4-Methacryloyloxybutyl-(E)-3-[4-(4-methoxyphenylcarbonyloxy)phenyl]acrylat und 0,003 g Azobisisobutyronitril wurden in 6,8 ml Tetrahydrofuran gelöst. Die Lösung wurde 10 Min. lang mit einem schwachen Argonstrom durchspült und anschliessend wurde das Reaktionsgefäss luftdicht verschlossen. Die Lösung wurde für 20 Stunden auf 60 °C erhitzt. Danach wurde das Reaktionsgefäss geöffnet und die Lösung unter Rühren mit 3,5 ml Tetrahydrofuran verdünnt. Anschliessend wurde die verdünnte Lösung unter Rühren bei Raumtemperatur in 300 ml Diethylether getropft. Das ausgefallene Polymer wurde abfiltriert, getrocknet, in 10 ml Dichlormethan gelöst und diese Lösung in 300 ml Diethylether getropft. Dieser Vorgang wurde weitere zweimal wiederholt. Nach Filtrieren und Trocknen bei 50 °C im Vakuum ergab dies 1,15 g Poly(4-methacryloyloxybutyl-(E)-3-[4-(4-methoxyphenylcarbonyloxy)phenyl]acrylat). Das Polymer besitzt eine Glasstufe bei Tg = 38 °C (Δ cₚ = 0,17 J/gK) und einen Klärpunkt (S_{A}-I) bei 202 °C (ΔH = 6,9 J/g).

Das als Ausgangsmaterial verwendete 4-Methacryloyloxybutyl-(E)-3-[4-(4-methoxyphenylcarbonyloxy)phenyl]acrylat wurde wie folgt hergestellt:
a) 5 g (E)-4-Hydroxyzimtsäure wurden in einer Lösung von 2,8 g Kaliumhydroxid in 25 ml Wasser gelöst. Zu der eisgekühlten Lösung wurde viermal je 1 g Chlorameisensäureethylester zugegeben und anschliessend jeweils 10 Minuten intensiv gerührt. Das Reaktionsgemisch wurde weitere 30 Minuten bei 0 °C gerührt und anschliessend mit 2 N Salzsäure neutralisiert. Das Rohprodukt wurde abfiltriert zweimal aus Ethanol/Wasser (Vol. 8:2) umkristallisiert. Dies ergab ergab 5,7 g 4-(E)-Ethyloxycarbonyloxyzimtsäure, Smp. 173 - 176 °C.
b) Eine Lösung von 5,2 g 4-(E)-Ethyloxycarbonyloxyzimtsäure in 20 ml Thionylchlorid und 0,05 ml N,N-Dimethylformamid wurde 3 Stunden unter Rückfluss erhitzt. Anschliessend wurde überschüssiges Thionylchlorid abdestilliert. Zu einer Lösung des entstandenen 4-(E)-Ethyloxycarbonyloxyzimtsäurechlorids in 15 ml Pyridin wurden unter Rühren bei 0 °C innert 15 Minuten 3,3 g 4-Hydroxybutylmethacrylat zugetropft. Das Reaktionsgemisch wurde bei Raumtemperatur 12 Stunden weitergerührt, dann auf Wasser gegossen und dreimal mit je 50 ml Ethylacetat extrahiert. Die vereinigten organischen Phasen wurden über Magnesiumsulfat getrocknet, filtriert und anschliessend eingeengt. Chromatographische Reinigung an Kieselgel mit Hexan/Ethylacetat (Vol. 7:3) ergab 3 g 4-Methacryloyloxybutyl-(E)-3-(4-ethoxycarbonyloxyphenyl)acrylat, Smp. 54 - 56 °C.
c) 5 g 4-Methacryloyloxybutyl-(E)-3-(4-ethoxycarbonyloxyphenyl)acrylat wurden in 40 ml Pyridin gelöst und bei Raumtemperatur mit einer Mischung aus 60 ml Aceton und 7 ml 25 %iger wässriger Ammoniaklösung versetzt. Das Reaktionsgemisch wurde 12 Stunden bei Raumtemperatur gerührt. Nach Abdestillieren des Acetons wurde mit 2 N Salzsäure neutralisiert, das Reaktionsgemisch mit 100 ml Wasser verdünnt und anschliessend 3 mal mit je 100ml Diethylether extrahiert. Die vereinigten organischen Phasen wurden über Natriumsulfat getrocknet, filtriert und eingeengt. Chromatographische Reinigung des Rückstandes an Kieselgel mit Hexan/Ethylacetat (Vol. 7:3) ergab 3 g 4-Methacryloyloxybutyl-(E)-3-(4-hydroxyphenyl)acrylat.
d) 2,0 g 4-Methoxybenzoesäurechlorid in 25 ml Dichlormethan wurden unter Rühren bei 0 °C zu einer Lösung von 3,5 g 4-Methacryloyloxybutyl-(E)-3-(4-hydroxyphenyl)acrylat und 1,2 g Triethylamin in 40 ml Dichlormethan innert 30 Min zugetropft. Das Reaktionsgemisch wurde über Nacht bei Raumtemperatur weitergerührt, dann filtriert und anschliessend eingeengt. Chromatographische Reinigung des Rückstandes an Kieselgel mit Hexan/Ethylacetat (Vol. 7:3) und zweimaliges Umkristallisieren aus Ethanol ergab 4,5 g 4-Methacryloyloxybutyl-(E)-3-[4-(4-methoxyphenylcarbonyloxy)phenyl]acrylat, Smp. 89 - 90 °C.

In analoger Weise können folgende Verbindungen hergestellt werden:
Poly(methacryloyloxyethyl-3-(E)-[4-(4-methoxybenzoyloxy)phenyl]acrylat);
Poly(methacryloyloxyethyl-3-(E)-[4-(4-ethoxybenzoyloxy)phenyl]acrylat);
Poly(methamyloyloxyethyl-3-(E)-[4-(4-propoxybenzoyloxy)phenyl]acrylat);
Poly(methacryloyloxyethyl-3-(E)-[4-(4-butyloxybenzoyloxy)phenyl]acrylat);
Poly(methacryloyloxyethyl-3-(E)-[4-(4-pentyloxybenzoyloxy)phenyl]acrylat);
Poly(methacryloyloxyethyl-3-(E)-[4-(4-hexyloxybenzoyloxy)phenyl]acrylat);
Poly(methacryloyloxyethyl-3-(E)-[4-(4-heptyloxybenzoyloxy)phenyl]acrylat);
Poly(methacryloyloxyethyl-3-(E)-[4-(4-octyloxybenzoyloxy)phenyl]acrylat);
Poly(methacryloyloxypropyl-3-(E)-[4-(4-methoxybenzoyloxy)phenyl]acrylat);
Poly(methacryloyloxyethyl-3-(E)-[4-(4-[(S)-2-methylbutyloxy]benzoyloxy)phenyl]acrylat);
Poly(acryloyloxybutyl-3-(E)-[4-(4-methoxybenzoyloxy)phenyl]acrylat).

### Beispiel 3

2,5 g 2-Methacryloyloxyethyl-(E)-3-(4-methoxyphenyl)acrylat und 2,5 g 2-Methacryloyloxyethyl-(E)-3-(4-chlorphenyl)acrylat, sowie 0,014 g Azobisisobutyronitril wurden in 35 ml Tetrahydrofuran gelöst. Die Lösung wurde 10 Minuten lang mit einem schwachen Argonstrom durchspült und anschliessend wurde das Reaktionsgefäss luftdicht verschlossen. Die Lösung wurde für 24 Stunden auf 60 °C erhitzt. Danach wurde das Reaktionsgefäss geöffnet und die Lösung unter Rühren mit 7,5 ml Tetrahydrofuran verdünnt. Anschliessend wurde die verdünnte Lösung unter Rühren bei Raumtemperatur in 500 ml Diethylether getropft. Das ausgefallene Polymer wurde abfiltriert, getrocknet, in 40 ml Dichlormethan gelöst und diese Lösung in 500 ml Diethylether getropft. Dieser Vorgang wurde weitere zweimal wiederholt. Nach Filtrieren und Trocknen bei 50 °C im Vakuum ergab dies 3,8 g Poly(2-methacryloyloxyethyl-(E)-3-(4-methoxyphenyl)acrylat-co-2-methacryloyloxyethyl-(E)-3-(4-chlorphenyl)acrylat). Das Polymer besitzt eine Glasstufe bei Tg = 74 °C, λ_{max.} (0,586 mg/100 ml CH₂Cl₂): 227 nm , (log Iₒ/I = 0,213), 287,8 nm , (log Iₒ/I = 0,367).

Die als Ausgangsmaterialien verwendeten Monomere wurden wie folgt hergestellt:

50 g 4-(E)-Chlorzimtsäure, 33,9 g 2-Hydoxyethylmethacrylat und 0,3 g 4-Dimethylaminopyridin wurden in 200 ml Tetrahydrofuran vorgelegt. Bei Raumtemperatur wurde innert 120 Minuten eine Lösung von 57,2 g Dicyclohexylcarbodiimid in 100 ml Tetrahydrofuran zugetropft. Die Mischung wurde weitere 28 Stunden bei Raumtemperatur gerührt. Anschliessend wurde der ausgefallene N,N'-Dicyclohexylharnstoff abfiltriert und mit 100 ml Tetrahydrofuran gewaschen. Nach Abdestillieren des Tetrahydrofurans wurde der Rückstand in 300 ml Dichlormethan gelöst. Die Dichlormethanlösung wurde mit 200 ml 5 %iger Essigsäure und anschliessend dreimal mit je 250 ml Wasser gewaschen, und über Natriumsulfat getrocknet. Nach Entfernen des Lösungsmittels wurde der Rückstand bei -50 °C aus Ethanol umkristallisiert. Dies ergab 20,4 g 2-Methacryloyloxyethyl-(E)-3-(4-chlorphenyl)acrylat als weisse Kristalle mit einem Schmelzpunkt von 58 - 60 °C.

Analog dazu wurde 2-Methacryloyloxyethyl-(E)-3-(4-methoxyphenyl)acrylat mit einem Schmelzpunkt von 35 - 36 °C hergestellt.
In analoger Weise können folgende Polymere hergestellt werden:
Poly(2-methacryloyloxyethyl-(E)-3-(4-methoxyphenyl)acrylat-co-2-methacryloyloxyethyl-(E)-3-(4-nitrophenyl)acrylat), Tg = 89 °C;
Poly(2-methacryloyloxyethyl-(E)-3-(4-cyanophenyl)acrylat-co-2-methacryloyloxyethyl-(E)-3-(4-methoxyphenyl)acrylat);
Poly(2-methacryloyloxyethyl-(E)-3-(4-methoxyphenyl)acrylat-co-2-acryloyloxyethyl-(E)-3-(4-nitrophenyl)acrylat);
Poly(2-methacryloyloxypropyl-(E)-3-(4-cyanophenyl)acrylat-co-2-methacryloyloxyhexyl-(E)-3-(4-cyanophenyl)acrylat);
Poly(2-acryloyloxyethyl-(E)-3-(4-methoxyphenyl)acrylat-co-2-methacryloyloxyethyl-(E)-3-(4-nitrophenyl)acrylat);
Poly(acryloyloxybutyl-(E)- 3-(4-cyanophenyl)acrylat-co-2-methacryloyloxyethyl-(E)-3-(4-methoxyphenyl)(Z)-3-methylacrylat);
Poly(acryloyloxybutyl-(E)-3-(4-methoxyphenyl)-2-carboxyethyl-acrylat-co-acryloyloxybutyl-(Z)-3-(4-methoxyphenyl)-2-carboxyethyl-acrylat);
Poly(2-methacryloyloxyethyl-(E)-3-(4-cyanophenyl)acrylat-co-2-methacryloyloxyethyl-(E)-3-(4-methoxyphenyl)acrylat);
Poly(2-chloracryloyloxyethyl-(E)-3-(4-chlorphenyl)acrylat-co-2-chloracryloyloxyethyl-(E)-3-(4-methoxyphenyl)acrylat);
Poly(2-methacrylamidoethyl-(E)-3-(4-cyanophenyl)acrylat-co-2-methacrylamidobutyl-3-(E)-[4-propyloxy-4'-biphenyl]acrylat]);
Poly(acrylamidomethyl-(E)-3-(4-butyloxyphenyl)acrylat-co-acrylamidobutyl-3-(E)-[4-butyloxy-4'-biphenyl]acrylat]);
Poly(2-methacrylamidoethyl-(E)-3-(4-octyloxy-4'-biphenyl)acrylat-co-2-acrylamidobutyl-3-(E)-{4-[(R)-2-octyloxy]-4'-biphenyl}acrylat]);
Poly(2-methacryloyloxybutyl-(E)-3-(4-ethyloxyphenyl)-(Z)-3-methylacrylat-co-2-methacryloyloxyethyl-(E)-3-(4-methoxy-4'-biphenyl)-2-cyanoacrylat);
Poly(methacryloyloxybutyl-3-(E)-[4-(trans-4-butylcyclohexyl)phenyl]-3-(Z)-methylacrylat-co-styrol);
Poly(acryloyloxyethyl-3-(E)-[4-octyloxy-4'-biphenyl]acrylat-co-methyl acrylat);
Poly(ethyl methacrylat-co-methacryloyloxyethyl-3-(E)-[4-(4-propoxybenzoyloxy)phenyl]acrylat);
Poly(methacrylamidoethyl-(E )-3-(4-proyloxyphenyl)acrylat-co-methyl methacrylamid);
Poly(ethyl 2-methacrylat-co-2-methacryloyloxypropyl-(E)-3-(4-pentyloxyphenyl)acrylat-co-2-methacryloyloxybutyl-(E)-3-(4-[(S)-2-methylbutyloxy]-4'-biphenyl)-2-carboxyethyl-acrylat);
Poly(methacryloyloxypropyl-3-(E)-[4-(trans-4-butylcyclohexyl)phenyl]-3-(Z)-methylacrylat-co-2-methacryloyloxypropyl-(E)-3-(4-[(R)-2-octyloxy]phenyl)-3-(Z)-methylacrylat-co-styrol).

### Beispiel 4

1,5 g (E)-3-(4-Cyano-phenyl)-N-[3-(2-methyl-acryloylamino)-propyl]-acrylamid und 0,0083 g Azobisisobutyronitril wurden in 10 ml N,N-Dimethylformamid gelöst. Die Lösung wurde 10 Min. lang mit einem schwachen Argonstrom durchspült. Anschliessend wurde das Reaktionsgefäss luftdicht verschlossen. Die Lösung wurde für 16 Stunden auf 70 °C erhitzt. Danach wurde das Reaktionsgefäss geöffnet und die Lösung unter Rühren bei Raumtemperatur in 300 ml Diethylether getropft. Das ausgefallene Polymer wurde abfiltriert, getrocknet, in 10 ml N,N-Dimethylformamid gelöst und diese Lösung erneut in 300 ml Diethylether getropft. Dieser Vorgang wurde noch zweimal wiederholt. Filtrieren und Trocknen bei 50 °C im Vakuum ergab 0,54 g Poly(3-methacryloylaminopropyl-(E)-3-[4-cyano-phenyl]acrylamid). Das Polymer besitzt eine Glasstufe bei Tg = 165 °C (Δ cₚ = 0,46 J/gK).

Das als Ausgangsmaterial verwendete (E)-3-(4-Cyano-phenyl)-N-[3-(2-methylacryloylamino)-propyl]-acrylamid wurde wie folgt hergestellt:

4,12 g 4-Cyano-zimtsäure wurden in 35 ml Methylenchlorid suspendiert und 10 Min. mit einem schwachen Argonstrom begast. Nach Abkühlung auf -15 °C wurden unter Rühren nacheinander 3,8 ml Diphenylphosphinsäurechlorid und 3,3 ml Triethylamin zugetropft. Anschliessend wurde zu diesem Reaktionsgemisch eine Suspension bestehend aus 4,25 g N-(3-Aminopropyl)-methacrylamid hydrochlorid und 6,6 ml Triethylamin in 40 ml Tetrahydrofuran langsam zugegeben. Der Reaktionsansatz wurde über Nacht gerührt, wobei die Temperatur auf etwa 12 °C anstieg. Die Reaktionsmischung wurde zur Aufarbeitung im Vakuum eingeengt. Der verbliebene Rückstand wurde in 200 ml Wasser ausgefällt, abfiltriert und aus einer Mischung aus 10 ml Ethanol und 30 ml Wasser umkristallisiert. Dies ergab 3,13 g (E)-3-(4-Cyano-phenyl)-N-[3-(2-methyl-acryloylamino)-propyl]-acrylamid. λₘₐₓ (Ethanol) = 284,3 nm (ε = 32290 l mol⁻¹ cm ⁻¹).

Unter Berücksichtigung von Beispiel 1b) können folgende Verbindungen in analoger Weise hergestellt werden:
Poly(2-methacryloylaminoethyl-(E )-3-[4-cyano-phenyl]acrylamid);
Poly(2-methacryloylaminoethyl-(E)-3-[3-cyano-phenyl]acrylamid);
Poly(3-methacryloylaminopropyl-(E)-3-[3-cyano-phenyl]acrylamid);
Poly(2-methacryloylaminoethyl-(E)-3-phenyl-acrylamid);
Poly(2-methacryloylaminoethyl-(E)-3-[4-methoxy-phenyl]acrylamid);
Poly(3-methacryloylaminopropyl-(E)-3-[4-methoxy-phenyl]acrylamid);
Poly(2-methacryloylaminoethyl-(E)-3-[4-ethoxy-phenyl]acrylamid);
Poly(3-methacryloylaminopropyl-(E)-3-[4-ethoxy-phenyl]acrylamid);
Poly(2-methacryloylaminoethyl-(E)-3-[4-methyl-phenyl]acrylamid);
Poly(3-methacryloylaminopropyl-(E)-3-[4-methyl-phenyl]acrylamid);
Poly(2-methacryloylaminoethyl-(E)-3-[4-ethyl-phenyl]acrylamid);
Poly(3-methacryloylaminopropyl-(E)-3-[4-ethyl-phenyl]acrylamid);
Poly(2-methacryloylaminoethyl-(E)-3-[4-trifluoromethyl-phenyl]acrylamid);
Poly(3-methacryloylaminopropyl-(E)-3-[4-trifluoromethyl-phenyl]acrylamid);
Poly(2-methacryloylaminoethyl-(E)-3-[4-trifluoromethoxy-phenyl]acrylamid);
Poly(3-methacryloylaminopropyl-(E)-3-[4-trifluoromethoxy-phenyl]acrylamid);
Poly(2-methacryloylaminoethyl-(E)-3-[3-nitro-phenyl]acrylamid);
Poly(3-methacryloylaminopropyl-(E)-3-[3-nitro-phenyl]acrylamid);
Poly(2-methacryloylaminoethyl-(E)-3-[4-nitro-phenyl]acrylamid);
Poly(3-methacryloylaminopropyl-(E)-3-[4-nitro-phenyl]acrylamid);
Poly(2-methacryloylaminoethyl-(E)-3-[2-chloro-phenyl]acrylamid);
Poly(2-methacryloylaminoethyl-(E)-3-[3-chloro-phenyl]acrylamid);
Poly(2-methacryloylaminoethyl-(E)-3-[4-chloro-phenyl]acrylamid);
Poly(3-methacryloylaminopropyl-(E)-3-[4-chloro-phenyl]acrylamid);
Poly(3-methacryloylaminopropyl-(E)-3-[3-fluoro-phenyl]acrylamid);
Poly(2-methacryloylaminoethyl-(E)-3-[4-fluoro-phenyl]acrylamid);
Poly(3-methacryloylaminopropyl-(E)-3-[4-fluoro-phenyl]acrylamid);
Poly(2-methacryloylaminoethyl-(E)-3-[2,4-di-methyl-phenyl]acrylamid);
Poly(3-methacryloylaminopropyl-(E)-3-[2,4-di-methyl-phenyl]acrylamid);
Poly(3-methacryloylaminopropyl-(E)-3-[2,3-di-methoxy-phenyl]acrylamid);
Poly(2-methacryloylaminoethyl-(E)-3-[2,4-di-methoxy-phenyl]acrylamid);
Poly(3-methacryloylaminopropyl-(E)-3-[2,4-di-methoxy-phenyl]acrylamid);
Poly(2-methacryloylaminoethyl-(E)-3-[3,4-di-methoxy-phenyl]acrylamid);
Poly(3-methacryloylaminopropyl-(E)-3-[3,4-di-methoxy-phenyl]acrylamid);
Poly(2-methacryloylaminoethyl-(E)-3-[3,5-di-methoxy-phenyl]acrylamid);
Poly(3-methacryloylaminopropyl-(E)-3-[3,5-di-methoxy-phenyl]acrylamid);
Poly(2-methacryloylaminoethyl-(E)-3-[3,4-di-cyano-phenyl]acrylamid);
Poly(3-methacryloylaminopropyl-(E)-3-[3,4-di-cyano-phenyl]acrylamid);
Poly(2-methacryloylaminoethyl-(E)-3-[3,5-di-cyano-phenyl]acrylamid);
Poly(3-methacryloylaminopropyl-(E)-3-[3,5-di-cyano-phenyl]acrylamid);
Poly(2-methacryloylaminoethyl-(E)-3-[2,4-di-nitro-phenyl]acrylamid);
Poly(3-methacryloylaminopropyl-(E)-3-[2,4-di-nitro-phenyl]acrylamid);
Poly(2-methacryloylaminoethyl-(E)-3-[3,4-di-chloro-phenyl]acrylamid);
Poly(3-methacryloylaminopropyl-(E)-3-3,4-di-chloro-phenyl]acrylamid);
Poly(2-methacryloylaminoethyl-(E)-3-[3,5-di-chloro-phenyl]acrylamid);
Poly(3-methacryloylaminopropyl-(E)-3-[3,5-di-chloro-phenyl]acrylamid);
Poly(2-methacryloylaminoethyl-(E)-3-[3,4-di-fluoro-phenyl]acrylamid);
Poly(3-methacryloylaminopropyl-(E)-3-[3,4-di-fluoro-phenyl]acrylamid);
Poly(2-methacryloylaminoethyl-(E)-3-[3,5-di-fluoro-phenyl]acrylamid);
Poly(3-methacryloylaminopropyl-(E)-3-[3,5-di-fluoro-phenyl]acrylamid);
Poly(2-methacryloylaminoethyl-(E)-3-[4-chloro-3-nitro-phenyl]acrylamid);
Poly(3-methacryloylaminopropyl-(E)-3-[4-chloro-3-nitro-phenyl]acrylamid);
Poly(2-methacryloylaminoethyl-(E)-3-[2-chloro-4-fluoro-phenyl]acrylamid);
Poly(3-methacryloylaminopropyl-(E)-3-[2-chloro-4-fluoro-phenyl]acrylamid);
Poly(2-methacryloylaminoethyl-(E)-3-[3-chloro-4-fluoro-phenyl]acrylamid);
Poly(3-methacryloylaminopropyl-(E)-3-[3-chloro-4-fluoro-phenyl]acrylamid);
Poly(2-methacryloylaminoethyl-(E)-3-[3-fluoro-2-methyl-phenyl]acrylamid);
Poly(3-methacryloylaminopropyl-(E)-3-[3-fluoro-2-methyl-phenyl]acrylamid);
Poly(3-methacryloylaminopropyl-(E)-3-biphenyl-acrylamid);
Poly(2-methacryloylaminoethyl-(E)-3-[4-methoxy-4'-biphenyl]acrylamid);
Poly(3-methacryloylaminopropyl-(E)-3-[4-methoxy-4'-biphenyl]acrylamid);
Poly(2-methacryloylaminoethyl-(E)-3-[4-cyano-4'-biphenyl]acrylamid);
Poly(3-methacryloylaminopropyl-(E)-3-[4-cyano-4'-biphenyl]acrylamid);
Poly(2-methacryloylaminoethyl-(E)-3-[4-(trans-4-methyl-cyclohexyl)-phenyl]acrylamid);
Poly(3-methacryloylaminopropyl-(E)-3-[4-(trans-4-methyl-cyclohexyl)-phenyl]acrylamid);
Poly(2-methacryloyloxyethyl-(E)-3-[4-cyano-phenyl]acrylamid);
Poly(3-methacryloyloxypropyl-(E)-3-[4-cyano-phenyl]acrylamid);
Poly(2-methacryloyloxyethyl-(E)-3-[3-cyano-phenyl]acrylamid);
Poly(3-methacryloyloxypropyl-(E)-3-[3-cyano-phenyl]acrylamid);
Poly(2-methacryloyloxyethyl-(E)-3-[4-methoxy-phenyl]acrylamid);
Poly(3-methacryloyloxypropyl-(E)-3-[4-methoxy-phenyl]acrylamid);
Poly(2-methacryloyloxyethyl-(E)-3-[4-ethoxy-phenyl]acrylamid);
Poly(3-methacryloyloxypropyl-(E)-3-[4-ethoxy-phenyl]acrylamid);
Poly(2-methacryloyloxyethyl-(E)-3-[4-methyl-phenyl]acrylamid);
Poly(3-methacryloyloxypropyl-(E)-3-[4-methyl-phenyl]acrylamid);
Poly(2-methacryloyloxyethyl-(E)-3-[4-ethyl-phenyl]acrylamid);
Poly(2-methacryloyloxyethyl-(E)-3-[4-trifluoromethyl-phenyl]acrylamid);
Poly(3-methacryloyloxypropyl-(E)-3-[4-trifluoromethyl-phenyl]acrylamid);
Poly(2-methacryloyloxyethyl-(E)-3-[4-trifluoromethoxy-phenyl]acrylamid);
Poly(3-methacryloyloxypropyl-(E)-3-[4-trifluoromethoxy-phenyl]acrylamid);
Poly(3-methacryloyloxypropyl-(E)-3-[3-nitro-phenyl]acrylamid);
Poly(2-methacryloyloxyethyl-(E)-3-[4-nitro-phenyl]acrylamid);
Poly(3-methacryloyloxypropyl-(E)-3-[4-nitro-phenyl]acrylamid);
Poly(3-methacryloyloxypropyl-(E)-3-[3-chloro-phenyl]acrylamid);
Poly(2-methacryloyloxyethyl-(E)-3-[4-chloro-phenyl]acrylamid);
Poly(3-methacryloyloxypropyl-(E)-3-[4-chloro-phenyl]acrylamid);
Poly(2-methacryloyloxyethyl-(E)-3-[3-fluoro-phenyl]acrylamid);
Poly(3-methacryloyloxypropyl-(E)-3-[3-fluoro-phenyl]acrylamid);
Poly(2-methacryloyloxyethyl-(E)-3-[4-fluoro-phenyl]acrylamid);
Poly(3-methacryloyloxypropyl-(E)-3-[4-fluoro-phenyl]acrylamid);
Poly(2-methacryloyloxyethyl-(E)-3-[2,4-di-methyl-phenyl]acrylamid);
Poly(3-methacryloyloxypropyl-(E)-3-[2,4-di-methyl-phenyl]acrylamid);
Poly(2-methacryloyloxyethyl-(E)-3-[2,4-di-methoxy-phenyl]acrylamid);
Poly(3-methacryloyloxypropyl-(E)-3-[2,4-di-methoxy-phenyl]acrylamid);
Poly(2-methacryloyloxyethyl-(E)-3-[3,4-di-methoxy-phenyl]acrylamid);
Poly(3-methacryloyloxypropyl-(E)-3-[3-[3,4-di-methoxy-phenyl]acrylamid);
Poly(2-methacryloyloxyethyl-(E)-3-[3,5-di-methoxy-phenyl]acrylamid);
Poly(3-methacryloyloxypropyl-(E)-3-[3,5-di-methoxy-phenyl]acrylamid);
Poly(2-methacryloyloxyethyl-(E)-3-[3,4-di-cyano-phenyl]acrylamid);
Poly(3-methacryloyloxypropyl-(E)-3-[3,4-di-cyano-phenyl]acrylamid);
Poly(2-methacryloyloxyethyl-(E)-3-[3,5-di-cyano-phenyl]acrylamid);
Poly(3-methacryloyloxypropyl-(E)-3-[3,5-di-cyano-phenyl]acrylamid);
Poly(2-methacryloyloxyethyl-(E)-3-[2,4-di-nitro-phenyl]acrylamid);
Poly(3-methacryloyloxypropyl-(E)-3-[2,4-di-nitro-phenyl]acrylamid);
Poly(2-methacryloyloxyethyl-(E)-3-[3,4-di-chloro-phenyl]acrylamid);
Poly(3-methacryloyloxypropyl-(E)-3-3,4-di-chloro-phenyl]acrylamid);
Poly(2-methacryloyloxyethyl-(E)-3-[3,5-di-chloro-phenyl]acrylamid);
Poly(3-methacryloyloxypropyl-(E)-3-[3,5-di-chloro-phenyl]acrylamid);
Poly(2-methacryloyloxyethyl-(E)-3-[3,4-di-fluoro-phenyl]acrylamid);
Poly(3-methacryloyloxypropyl-(E)-3-[3,4-di-fluoro-phenyl]acrylamid);
Poly(2-methacryloyloxyethyl-(E)-3-[3,5-di-fluoro-phenyl]acrylamid);
Poly(3-methacryloyloxypropyl-(E)-3-[3,5-di-fluoro-phenyl]acrylamid);
Poly(2-methacryloyloxyethyl-(E)-3-[3-bromo-4-fluoro-phenyl]acrylamid);
Poly(3-methacryloyloxypropyl-(E)-3-[3-bromo-4-fluoro-phenyl]acrylamid);
Poly(2-methacryloyloxyethyl-(E)-3-[5-bromo-2-methoxy-phenyl]acrylamid);
Poly(2-methacryloyloxyethyl-(E)-3-[2-chloro-5-nitro-phenyl]acrylamid);
Poly-(3-methacryloyloxypropyl-(E)-3-[2-chloro-5-nitro-phenyl]acrylamid);
Poly(2-methacryloyloxyethyl-(E)-3-[4-chloro-3-nitro-phenyl]acrylamid);
Poly(3-methacryloyloxypropyl-(E)-3-[4-chloro-3-nitro-phenyl]acrylamid);
Poly(2-methacryloyloxyethyl-(E)-3-[2-chloro-4-fluoro-phenyl]acrylamid);
Poly(3-methacryloyloxypropyl-(E)-3-[2-chloro-4-fluoro-phenyl]acrylamid);
Poly(2-methacryloyloxyethyl-(E)-3-[2-chloro-6-fluoro-phenyl]acrylamid);
Poly(3-methacryloyloxypropyl-(E)-3-[2-chloro-6-fluoro-phenyl]acrylamid);
Poly(2-methacryloyloxyethyl-(E)-3-[3-chloro-4-fluoro-phenyl]acrylamid);
Poly(3-methacryloyloxypropyl-(E)-3-[3-chloro-4-fluoro-phenyl]acrylamid);
Poly(2-methacryloyloxyethyl-(E)-3-[3-fluoro-2-methyl-phenyl]acrylamid);
Poly(3-methacryloyloxypropyl-(E)-3-[3-fluoro-2-methyl-phenyl]acrylamid);
Poly(2-methacryloyloxyethyl-(E)-3-biphenylacrylamid);
Poly(2-methacryloyloxyethyl-(E)-3-[4-methoxy-4'-biphenyl]acrylamid);
Poly(3-methacryloyloxypropyl-(E)-3-[4-methoxy-4'-biphenyl]acrylamid);
Poly(2-methacryloyloxyethyl-(E)-3-[4-cyano-4'-biphenyl]acrylamid);
Poly(3-methacryloyloxypropyl-(E)-3-[4-cyano-4'-biphenyl]acrylamid);
Poly(2-methacryloyloxyethyl-(E)-3-[4-(trans-4-methyl-cyclohexyl)-phenyl]acrylamid);
Poly(3-methacryloyloxypropyl-(E)-3-[4-(trans-4-methyl-cyclohexyl)-phenyl]acrylamid);
Poly(2-methacryloylaminoethyl-(E)-3-[4-cyano-phenyl]acrylat);
Poly(3-methacryloylaminopropyl-(E)-3-[4-cyano-phenyl]acrylat);
Poly(2-methacryloylaminoethyl-(E)-3-[3-cyano-phenyl]acrylat);
Poly(3-methacryloylaminopropyl-(E)-3-[3-cyano-phenyl]acrylat);
Poly(2-methacryloylaminoethyl-(E)-3-phenyl-acrylat);
Poly(2-methacryloylaminoethyl-(E)-3-[4-methoxy-phenyl]acrylat);
Poly(3-methacryloylaminopropyl-(E)-3-[4-methoxy-phenyl]acrylat);
Poly(2-methacryloylaminoethyl-(E)-3-[4-ethoxy-phenyl]acrylat);
Poly(3-methacryloylaminopropyl-(E)-3-[4-ethoxy-phenyl]acrylat);
Poly(2-methacryloylaminoethyl-(E)-3-[4-methyl-phenyl]acrylat);
Poly(3-methacryloylaminopropyl-(E)-3-[4-methyl-phenyl]acrylat);
Poly(2-methacryloylaminoethyl-(E)-3-[4-ethyl-phenyl]acrylat);
Poly(3-methacryloylaminopropyl-(E)-3-[4-ethyl-phenyl]acrylat);
Poly(2-methacryloylaminoethyl-(E)-3-[4-trifluoromethyl-phenyl]acrylat);
Poly(3-methacryloylaminopropyl-(E)-3-[4-trifluoromethyl-phenyl]acrylat);
Poly(2-methacryloylaminoethyl-(E)-3-[4-trifluoromethoxy-phenyl]acrylat);
Poly(3-methacryloylaminopropyl-(E)-3-[4-trifluoromethoxy-phenyl]acrylat);
Poly(2-methacryloylaminoethyl-(E)-3-[3-nitro-phenyl]acrylat);
Poly(3-methacryloylaminopropyl-(E)-3-[3-nitro-phenyl]acrylat);
Poly(2-methacryloylaminoethyl-(E)-3-[4-nitro-phenyl]acrylat);
Poly(3-methacryloylaminopropyl-(E)-3-[4-nitro-phenyl]acrylat);
Poly(2-methacryloylaminoethyl-(E)-3-[3-chloro-phenyl]acrylat);
Poly(3-methacryloylaminopropyl-(E)-3-[3-chloro-phenyl]acrylat);
Poly(2-methacryloylaminoethyl-(E)-3-[4-chloro-phenyl]acrylat);
Poly(3-methacryloylaminopropyl-(E)-3-[4-chloro-phenyl]acrylat);
Poly(2-methacryloylaminoethyl-(E)-3-[3-fluoro-phenyl]acrylat);
Poly(3-methacryloylaminopropyl-(E)-3-[3-fluoro-phenyl]acrylat);
Poly(2-methacryloylaminoethyl-(E)-3-[4-fluoro-phenyl]acrylat);
Poly(3-methacryloylaminopropyl-(E)-3-[4-fluoro-phenyl]acrylat);
Poly(2-methacryloylaminoethyl-(E)-3-[2,4-di-methyl-phenyl]acrylat);
Poly(3-methacryloylaminopropyl-(E)-3-[2,4-di-methyl-phenyl]acrylat);
Poly(2-methacryloylaminoethyl-(E)-3-[2,4-di-methoxy-phenyl]acrylat);
Poly(3-methacryloylaminopropyl-(E)-3-[2,4-di-methoxy-phenyl]acrylat);
Poly(2-methacryloylaminoethyl-(E)-3-[3,4-di-methoxy-phenyl]acrylat);
Poly(3-methacryloylaminopropyl-(E)-3-[3,4-di-methoxy-phenyl]acrylat);
Poly(2-methacryloylaminoethyl-(E)-3-[3,5-di-methoxy-phenyl]acrylat);
Poly(3-methacryloylaminopropyl-(E)-3-[3,5-di-methoxy-phenyl]acrylat);
Poly(2-methacryloylaminoethyl-(E)-3-[3,4-di-cyano-phenyl]acrylat);
Poly(3-methacryloylaminopropyl-(E)-3-[3,4-di-cyano-phenyl]acrylat);
Poly(2-methacryloylaminoethyl-(E)-3-[3,5-di-cyano-phenyl]acrylat);
Poly(3-methacryloylaminopropyl-(E)-3-[3,5-di-cyano-phenyl]acrylat);
Poly(2-methacryloylaminoethyl-(E)-3-[2,4-di-nitro-phenyl]acrylat);
Poly(3-methacryloylaminopropyl-(E)-3-[2,4-di-nitro-phenyl]acrylat);
Poly(2-methacryloylaminoethyl-(E)-3-[3,4-di-chloro-phenyl]acrylat);
Poly(3-methacryloylaminopropyl-(E)-3-3,4-di-chloro-phenyl]acrylat);
Poly(2-methacryloylaminoethyl-(E)-3-[3,5-di-chloro-phenyl]acrylat);
Poly(3-methacryloylaminopropyl-(E)-3-[3,5-di-chloro-phenyl]acrylat);
Poly(2-methacryloylaminoethyl-(E)-3-[3,4-di-fluoro-phenyl]acrylat);
Poly(3-methacryloylaminopropyl-(E)-3-[3,4-di-fluoro-phenyl]acrylat);
Poly(2-methacryloylaminoethyl-(E)-3-[3,5-di-fluoro-phenyl]acrylat);
Poly(3-methacryloylaminopropyl-(E)-3-[3,5-di-fluoro-phenyl]acrylat);
Poly(2-methacryloylaminoethyl-(E)-3-[3-bromo-4-fluoro-phenyl]acrylat);
Poly(2-methacryloylaminoethyl-(E)-3-[4-chloro-3-nitro-phenyl]acrylat);
Poly(3-methacryloylaminopropyl-(E)-3-[4-chloro-3-nitro-phenyl]acrylat);
Poly(2-methacryloylaminoethyl-(E)-3-[2-chloro-4-fluoro-phenyl]acrylat);
Poly(3-methacryloylaminopropyl-(E)-3-[2-chloro-4-fluoro-phenyl]acrylat);
Poly(2-methacryloylaminoethyl-(E)-3-[3-chloro-4-fluoro-phenyl]acrylat);
Poly(3-methacryloylaminopropyl-(E)-3-[3-chloro-4-fluoro-phenyl]acrylat);
Poly(2-methacryloylaminoethyl-(E)-3-[3-fluoro-2-methyl-phenyl]acrylat);
Poly(3-methacryloylaminopropyl-(E)-3-[3-fluoro-2-methyl-phenyl]acrylat);
Poly(2-methacryloylaminoethyl-(E)-3-[4-methoxy-4'-biphenyl]acrylat);
Poly(3-methacryloylaminopropyl-(E)-3-[4-methoxy-4'-biphenyl]acrylat);
Poly(2-methacryloylaminoethyl-(E )-3-[4-cyano-4'-biphenyl]acrylat);
Poly(3-methacryloylaminopropyl-(E)-3-[4-cyano-4'-biphenyl]acrylat);
Poly(2-methacryloylaminoethyl-(E)-3-[4-(trans-4-methyl-cyclohexyl)-phenyl]acrylat);
Poly(3-methacryloylaminopropyl-(E)-3-[4-(trans-4-methyl-cyclohexyl)-phenyl]acrylat);
Poly(3-methacryloylaminopropyl-(E)-3-[4-(trans-4-ethyl-cydohexyl)-phenyl]acrylat);
Poly(2-acryloylaminoethyl-(E)-3-[4-cyano-phenyl]acrylamid);
Poly(3-acryloylaminopropyl-(E)-3-[3-cyano-phenyl]acrylamid);
Poly(4-acryloylaminobutyl-(E)-3-phenyl-acrylamid);
Poly(3-acryloylaminopropyl-(E)-3-[4-methoxy-phenyl]acrylamid);
Poly(2-acryloylaminoethyl-(E)-3-[4-ethoxy-phenyl]acrylamid);
Poly(2-acryloylaminoethyl-(E)-3-[4-methyl-phenyl]acrylamid);
Poly(4-acryloylaminobutyl-(E)-3-[4-ethyl-phenyl]acrylamid);
Poly(2-acryloylaminoethyl-(E)-3-[4-trifluoromethyl-phenyl]acrylamid);
Poly(3-acryloylaminopropyl-(E)-3-[4-trifluoromethoxy-phenyl]acrylamid);
Poly(2-acryloylaminoethyl-(E)-3-[3-nitro-phenyl]acrylamid);
Poly(2-acryloylaminoethyl-(E)-3-[4-nitro-phenyl]acrylamid);
Poly(3-acryloylaminopropyl-(E)-3-[3-chloro-phenyl]acrylamid);
Poly(2-acryloylaminoethyl-(E)-3-[4-chloro-phenyl]acrylamid);
Poly(2-acryloylaminoethyl-(E)-3-[3-fluoro-phenyl]acrylamid);
Poly(3-acryloylaminopropyl-(E)-3-[4-fluoro-phenyl]acrylamid);
Poly(4-acryloylaminobutyl-(E)-3-[2,4-di-methyl-phenyl]acrylamid);
Poly(3-acryloylaminopropyl-(E)-3-[2,3-di-methoxy-phenyl]acrylamid);
Poly(2-acryloylaminoethyl-(E)-3-[2,4-di-methoxy-phenyl]acrylamid);
Poly(2-acryloylaminoethyl-(E)-3-[3,4-di-methoxy-phenyl]acrylamid);
Poly(3-acryloylaminopropyl-(E)-3-[3,5-di-methoxy-phenyl]acrylamid);
Poly(2-acryloylaminoethyl-(E)-3-[3,4-di-cyano-phenyl]acrylamid);
Poly(3-acryloylaminopropyl-(E)-3-[3,5-di-cyano-phenyl]acrylamid);
Poly(2-acryloylaminoethyl-(E)-3-[3,5-di-chloro-phenyl]acrylamid);
Poly(2-acryloylaminoethyl-(E)-3-[3,4-di-fluoro-phenyl]acrylamid);
Poly(3-acryloylaminopropyl-(E)-3-[3,5-di-fluoro-phenyl]acrylamid);
Poly(2-acryloylaminoethyl-(E)-3-[3-bromo-4-fluoro-phenyl]acrylamid);
Poly(2-acryloylaminoethyl-(E)-3-[5-bromo-2-methoxy-phenyl]acrylamid);
Poly(2-acryloylaminoethyl-(E)-3-[2-chloro-5-nitro-phenyl]acrylamid);
Poly(3-acryloylaminopropyl-(E)-3-[4-chloro-3-nitro-phenyl]acrylamid);
Poly(2-acryloylaminoethyl-(E)-3-[2-chloro-4-fluoro-phenyl]acrylamid);
Poly(3-acryloylaminopropyl-(E)-3-[3-fluoro-2-methyl-phenyl]acrylamid);
Poly(3-acryloylaminopropyl-(E)-3-biphenyl-acrylamid);
Poly(2-acryloylaminoethyl-(E)-3-[4-methoxy-4'-biphenyl]acrylamid);
Poly(2-acryloylaminoethyl-(E)-3-[4-cyano-4'-biphenyl]acrylamid);
Poly(3-acryloylaminopropyl-(E)-3-[4-(trans-4-methyl-cyclohexyl)-phenyl]acrylamid);
Poly(2-acryloylaminoethyl-(E)-3-[4-(trans-4-ethyl-cyclohexyl)-phenyl]acrylamid);
Poly(2-acryloyloxyethyl-(E)-3-[4-cyano-phenyl]acrylamid);
Poly(4-acryloyloxybutyl-(E)-3-[3-cyano-phenyl]acrylamid);
Poly(3 -acryloyloxypropyl-(E)-3-phenyl-acrylamid);
Poly(2-acryloyloxyethyl-(E)-3-[4-methoxy-phenyl]acrylamid);
Poly(2-acryloyloxyethyl-(E)-3-[4-ethoxy-phenyl]acrylamid);
Poly(3-acryloyloxypropyl-(E)-3-[4-methyl-phenyl]acrylamid);
Poly(3-acryloyloxypropyl-(E)-3-[4-ethyl-phenyl]acrylamid);
Poly(2-acryloyloxyethyl-(E)-3-[4-trifluoromethyl-phenyl]acrylamid);
Poly(2-acryloyloxyethyl-(E)-3-[4-trifluoromethoxy-phenyl]acrylamid);
Poly(2-acryloyloxyethyl-(E)-3-[4-nitro-phenyl]acrylamid);
Poly(2-acryloyloxyethyl-(E)-3-[4-chloro-phenyl]acrylamid);
Poly(2-acryloyloxyethyl-(E)-3-[3-fluoro-phenyl]acrylamid);
Poly(3-acryloyloxypropyl-(E)-3-[4-fluoro-phenyl]acrylamid);
Poly(2-acryloyloxyethyl-(E)-3-[2,4-di-methyl-phenyl]acrylamid);
Poly(2-acryloyloxyethyl-(E)-3-[2,3-di-methoxy-phenyl]acrylamid);
Poly(3-acryloyloxypropyl-(E)-3-[2,4-di-methoxy-phenyl]acrylamid);
Poly(2-acryloyloxyethyl-(E)-3-[3,4-di-methoxy-phenyl]acrylamid);
Poly(2-acryloyloxyethyl-(E)-3-[3,5-di-methoxy-phenyl]acrylamid);
Poly(2-acryloyloxyethyl-(E)-3-[3,5-di-cyano-phenyl]acrylamid);
Poly(2-acryloyloxyethyl-(E)-3-[2,4-di-nitro-phenyl]acrylamid);
Poly(3-acryloyloxypropyl-(E)-3-[3,4-di-chloro-phenyl]acrylamid);
Poly(3-acryloyloxypropyl-(E)-3-[3,5-di-chloro-phenyl]acrylamid);
Poly(2-acryloyloxyethyl-(E)-3-[3,4-di-fluoro-phenyl]acrylamid);
Poly(2-acryloyloxyethyl-(E)-3-[3,5-di-fluoro-phenyl]acrylamid);
Poly(2-acryloyloxyethyl-(E)-3-[3-bromo-4-fluoro-phenyl]acrylamid);
Poly(3-acryloyloxypropyl-(E)-3-[4-chloro-3-nitro-phenyl]acrylamid);
Poly(4-acryloyloxybutyl-(E)-3-[2-chloro-4-fluoro-phenyl]acrylamid);
Poly(2-acryloyloxyethyl-(E)-3-[3-chloro-4-fluoro-phenyl]acrylamid);
Poly(3-acryloyloxypropyl-(E)-3-[3-fluoro-2-methyl-phenyl]acrylamid);
Poly(3-acryloyloxypropyl-(E)-3-biphenyl-acrylamid);
Poly(2-acryloyloxyethyl-(E)-3-[4-methoxy-4'-biphenyl]acrylamid);
Poly(2-acryloyloxyethyl-(E)-3-[4-cyano-4'-biphenyl]acrylamid);
Poly(3-acryloyloxypropyl-(E)-3-[4-(trans-4-methyl-cyclohexyl)-phenyl]acrylamid);
Poly(2-acryloylaminoethyl-(E)-3-[4-cyano-phenyl]acrylat);
Poly(3-acryloylaminopropyl-(E)-3-[3-cyano-phenyl]acrylat);
Poly(2-acryloylaminoethyl-(E)-3-[4-methoxy-phenyl]acrylat);
Poly(2-acryloylaminoethyl-(E)-3-[4-ethoxy-phenyl]acrylat);
Poly(2-acryloylaminoethyl-(E)-3-[4-methyl-phenyl]acrylat);
Poly(3-acryloylaminopropyl-(E)-3-[4-ethyl-phenyl]acrylat);
Poly(2-acryloylaminoethyl-(E)-3-[4-propyl-phenyl]acrylat);
Poly(2-acryloylaminoethyl-(E)-3-[4-trifluoromethyl-phenyl]acrylat);
Poly(3-acryloylaminopropyl-(E)-3-[4-trifluoromethoxy-phenyl]acrylat);
Poly(4-acryloylaminobutyl-(E)-3-[3-nitro-phenyl]acrylat);
Poly(2-acryloylaminoethyl-(E)-3-[4-nitro-phenyl]acrylat);
Poly(2-acryloylaminoethyl-(E)-3-[3-chloro-phenyl]acrylat);
Poly(3-acryloylaminopropyl-(E)-3-[4-chloro-phenyl]acrylat);
Poly(2-acryloylaminoethyl-(E)-3-[3-fluoro-phenyl]acrylat);
Poly(2-acryloylaminoethyl-(E)-3-[4-fluoro-phenyl]acrylat);
Poly(3-acryloylaminopropyl-(E)-3-[2,4-di-methyl-phenyl]acrylat);
Poly(3-acryloylaminopropyl-(E)-3-[2,3-di-methoxy-phenyl]acrylat);
Poly(2-acryloylaminoethyl-(E)-3-[2,4-di-methoxy-phenyl]acrylat);
Poly(2-acryloylaminoethyl-(E)-3-[3,4-di-methoxy-phenyl]acrylat);
Poly(2-acryloylaminoethyl-(E)-3-[3,4-di-cyano-phenyl]acrylat);
Poly(2-acryloylaminoethyl-(E )-3-[3,5-di-cyano-phenyl]acrylat);
Poly(3-acryloylaminopropyl-(E)-3-[2,4-di-nitro-phenyl]acrylat);
Poly(3-acryloylaminopropyl-(E)-3-[3,4-di-chloro-phenyl]acrylat);
Poly(2-acryloylaminoethyl-(E)-3-[3,5-di-chloro-phenyl]acrylat);
Poly(2-acryloylaminoethyl-(E)-3-[3,4-di-fluoro-phenyl]acrylat);
Poly(2-acryloylaminoethyl-(E)-3-[3-bromo-4-fluoro-phenyl]acrylat);
Poly(2-acryloylaminoethyl-(E)-3-[4-chloro-3-nitro-phenyl]acrylat);
Poly(3-acryloylaminopropyl-(E)-3-[2-chloro-4-fluoro-phenyl]acrylat);
Poly(2-acryloylaminoethyl-(E)-3-[3-chloro-4-fluoro-phenyl]acrylat);
Poly(2-acryloylaminoethyl-(E)-3-[3-fluoro-2-methyl-phenyl]acrylat);
Poly(4-acryloylaminobutyl-(E)-3-[4-methoxy-4'-biphenyl]acrylat);
Poly(2-acryloylaminoethyl-(E)-3-[4-cyano-4'-biphenyl]acrylat);
Poly(3-acryloylaminopropyl-(E)-3-[4-(trans-4-methyl-cyclohexyl)-phenyl]acrylat);
Poly(2-acryloylaminoethyl-(E)-3-[4-(trans-4-ethyl-cyclohexyl)-phenyl]acrylat).

### Beispiel 5

1,63 g 2-Methyl-acrylsäure (E)-1-[3-(4-methoxy-phenyl)-acryloyl]-piperidin-4-yl ester und 0,0081 g Azobisisobutyronitril wurden in 10 ml Tetrahydrofuran gelöst. Die Lösung wurde 10 Min. lang mit einem schwachen Argonstrom durchspült. Anschliessend wurde das Reaktionsgefäss luftdicht verschlossen. Der Ansatz wurde für 19 Stunden auf 60 °C erhitzt. Danach wurde das Reaktionsgefäss geöffnet und die Lösung unter Rühren bei Raumtemperatur in 300 ml Diethylether getropft. Das ausgefallene Polymer wurde abfiltriert, getrocknet, in 10 ml Tetrahydrofuran gelöst und diese Lösung erneut in 300 ml Diethylether getropft. Dieser Vorgang wurde noch zweimal wiederholt. Filtrieren und Trocknen bei 50 °C im Vakuum ergab 1,33 g Poly[1-[1-[(E)-3-(4-methoxy-phenyl)-acryloyl]-piperidin-4-yloxycarbonyl]-1-methyl-ethylen]. Das Polymer besitzt eine Glasstufe bei Tg = 143 °C (Δ cₚ = 0,30 J/gK).

Der als Ausgangsmaterial verwendete 2-Methyl-acrylsäure (E)-1-[3-(4-methoxy-phenyl)-acryloyl]-piperidin-4-yl ester wurde wie folgt hergestellt:
a) Zu einer Lösung von 4.06 g p-Methoxyzimtsäure in 100 ml trockenem Aceton wurden bei Raumtemperatur zunächst 2,1 g Cyanurchlorid und anschliessend 3,2 ml Triethylamin langsam zugegeben. Nach drei Stunden wurde das ausgefallene Nebenprodukt abfiltriert und das Filtrat bis zur Trockne eingeengt. Das als Rückstand verbliebene p-Methoxyzimtsäurechlorid wurde in 50 ml trockenem Methylenchlorid aufgenommen und sofort weiterverarbeitet
   Zu einer auf 0°C abgekühlten Lösung von 2,8 g 4-Hydroxypiperidin in 100 ml trockenem Methylenchlorid wurden in einer Argonatmosphäre 3,5 ml Trimethylsilylchlorid getropft. Nach zweistündigem Rühren bei 0 °C wurde die Lösung mit 2 ml Triethylamin versetzt. Zu diesem Gemisch wurde wiederum unter Eiskühlung das zuvor hergestellte p-Methoxyzimtsäurechlorid in 50 ml Methylenchlorid zugetropft. Der Reaktionsansatz wurde über Nacht gerührt und dabei langsam auf Raumtemperatur erwärmt. Anschliessend wurde er über eine dünne Kieselgelschicht filtriert. Nachdem das Methylenchlorid im Vakuum vollständig entfernt worden war, wurde der verbliebene Rückstand in 50 ml Methanol aufgenommen und nach Zugabe von 2,7 g Zitronensäure weitere drei Stunden bei Raumtemperatur gerührt. Zur Reinigung wurde der Ansatz im Vakuum bis zur Trockne eingedampft, das Rohprodukt in 100 ml Methylenchlorid aufgenommen und mit der gleichen Menge halbgesättigter Natriumhydrogencarbonatlösung gewaschen. Die wässrige Phase wurde noch zweimal mit je 50 ml Methylenchlorid extrahiert. Anschliessend wurden die organischen Phasen vereinigt, über Magnesiumsulfat getrocknet, mit 2 g Kieselgel versetzt und filtriert. Nach Entfernung des Lösungsmittels verblieben 6,65 g 4-Hydroxy-(E)-1-[3-(4-methoxy-phenyl)-acryloyl]-piperidin als gelbes Öl.
b) Eine Lösung von 6,65 g 4-Hydroxy-(E)-1-[3-(4-methoxy-phenyl)-acryloyl]piperidin in 50 ml Methylenchlorid wurde bei 0 °C vorgelegt und unter Argon-begasung mit 4 ml Triethylamin versetzt. Innerhalb von 15 Minuten wurden 2,7 ml Methacrylsäurechlorid zugetropft. Anschliessend wurde der Reaktionsansatz im Vakuum bis zur Trockne eingeengt. Die chromatographische Reinigung des Rückstandes an Kieselgel mit Ether/Hexan (Vol. 4:1) ergab 4,21 g 2-Methyl-acrylsäure (E)-1-[3-(4-methoxy-phenyl)-acryloyl]-piperidin-4-yl ester als farbloses Öl. λₘₐₓ (Methylenchlorid) = 292,5 nm (ε = 22775 l mol⁻¹ cm⁻¹).

Unter Berücksichtigung von Beispiel 1b) können folgende Verbindungen in analoger Weise hergestellt werden:
Poly[1-[1-[(E)-3-phenyl-acryloyl)-piperidin-4-yloxycarbonyl]-1-methyl-ethylen];
Poly[1-[1-[(E)-3-(4-methyl-phenyl)-acryloyl]-piperidin-4-yloxycarbonyl]-1-methyl-ethylen];
Poly[1-[1-[(E)-3-(4-ethyl-phenyl)-acryloyl]-piperidin-4-yloxycarbonyl]-1-methyl-ethylen];
Poly[1-[1-[(E)-3-(4-ethoxy-phenyl)-acryloyl]-piperidin-4-yloxycarbonyl]-1-methyl-ethylen];
Poly[1-[1-[(E)-3-(4-trifluoromethyl-phenyl)-acryloyl]-piperidin-4-yloxycarbonyl]-1-methyl-ethylen];
Poly[1-[1-[(E)-3-(4-trifluoromethoxy-phenyl)-acryloyl]-piperidin-4-yloxycarbonyl]-1-methyl-ethylen];
Poly[1-[1-[(E)-3-(3-cyano-phenyl)-acryloyl]-piperidin-4-yloxycarbonyl]-1-methyl-ethylen];
Poly[1-[1-[(E)-3-(4-cyano-phenyl)-acryloyl]-piperidin-4-yloxycarbonyl]-1-methyl-ethylen];
Poly[1-[1-[(E)-3-(3-nitro-phenyl)-acryloyl]-piperidin-4-yloxycarbonyl]-1-methyl-ethylen];
Poly[1-[1-[(E)-3-(4-nitro-phenyl)-acryloyl]-piperidin-4-yloxycarbonyl]-1-methyl-ethylen];
Poly[1-[1-[(E)-3-(3-chloro-phenyl)-acryloyl]-piperidin-4-yloxycarbonyl]-1-methyl-ethylen];
Poly[1-[1-[(E)-3-(4-chloro-phenyl)-acryloyl]-piperidin-4-yloxycarbonyl]-1-methyl-ethylen];
Poly[1-[1-[(E)-3-(3-fluoro-phenyl)-acryloyl]-piperidin-4-yloxycarbonyl]-1-methyl-ethylen];
Poly[1-[1-[(E)-3-(4-fluoro-phenyl)-acryloyl]-piperidin-4-yloxycarbonyl]-1-methyl-ethylen];
Poly[1-[1-[(E)-3-(2,4-di-methyl-phenyl)-acryloyl]-piperidin-4-yloxycarbonyl]-1-methyl-ethylen];
Poly[1-[1-[(E)-3-(2,3-di-methoxy-phenyl)-acryloyl]-piperidin-4-yloxycarbonyl]-1-methyl-ethylen];
Poly[1-[1-[(E)-3-(2,4-di-methoxy-phenyl)-acryloyl]-piperidin-4-yloxycarbonyl]-1-methyl-ethylen];
Poly[1-[1-[(E)-3-(3,4-di-methoxy-phenyl)-acryloyl]-piperidin-4-yloxycarbonyl]-1-methyl-ethylen];
Poly[1-[1-[(E)-3-(3,5-di-methoxy-phenyl)-acryloyl]-piperidin-4-yloxycarbonyl]-1-methyl-ethylen];
Poly[1-[1-[(E)-3-(3,4-di-cyano-phenyl)-acryloyl]-piperidin-4-yloxycarbonyl]-1-methyl-ethylen];
Poly[1-[1-[(E)-3-(3,5-di-cyano-phenyl)-acryloyl]-piperidin-4-yloxycarbonyl]-1-methyl-ethylen];
Poly[1-[1-[(E)-3-(2,4-di-nitro-phenyl)-acryloyl]-piperidin-4-yloxycarbonyl]-1-methyl-ethylen];
Poly[1-[1-[(E)-3-(3,4-di-chloro-phenyl)-acryloyl]-piperidin-4-yloxycarbonyl]-1-methyl-ethylen];
Poly[1-[1-[(E)-3-(3,5-di-chloro-phenyl)-acryloyl]-piperidin-4-yloxycarbonyl]-1-methyl-ethylen];
Poly[1-[1-[(E)-3-(3,4-di-fluoro-phenyl)-acryloyl]-piperidin-4-yloxycarbonyl]-1-methyl-ethylen];
Poly[1-[1-[(E)-3-(3,5-di-fluoro-phenyl)-acryloyl]-piperidin-4-yloxycarbonyl]-1-methyl-ethylen];
Poly[1-[1-[(E)-3-(3-bromo-4-fluoro-phenyl)-acryloyl]-piperidin-4-yloxycarbonyl]-1-methyl-ethylen];
Poly[1-[1-[(E)-3-(4-chloro-3-nitro-phenyl)-acryloyl]-piperidin-4-yloxycarbonyl]-1-methyl-ethylen];
Poly[1-[1-[(E)-3-(2-chloro-4-fluoro-phenyl)-acryloyl]-piperidin-4-yloxycarbonyl]-1-methyl-ethylen];
Poly[1-[1-[(E)-3-(3-chloro-4-fluoro-phenyl)-acryloyl]-piperidin-4-yloxycarbonyl]-1-methyl-ethylen];
Poly[1-[1-[(E)-3-(3-fluoro-2-methyl-phenyl)-acryloyl]-piperidin-4-yloxycarbonyl]-1-methyl-ethylen];
Poly[1-[1-[(E)-3-(4-cyano-4'-biphenyl)-acryloyl]-piperidin-4-yloxycarbonyl]-1-methyl-ethylen];
Poly[1-[1-[(E)-3-[4-(trans-4-methyl-cyclohexyl)-phenyl]-acryloyl]-piperidin-4-yloxycarbonyl]-1-methyl-ethylen];
Poly[1-(1-carbonyl-4-[(E)-3-(4-methyl-phenyl)-acryloyloxy]-piperidin]-1-methyl-ethylen];
Poly[1-(1-carbonyl-4-[(E)-3-(4-methoxy-phenyl)-acryloyloxy]-piperidin]-1-methyl-ethylen];
Poly[1-[1-carbonyl-4-[(E)-3-(4-trifluoromethyl-phenyl)-acryloyloxy]-piperidin]-1-methyl-ethylen];
Poly[1-[1-carbonyl-4-[(E)-3-(4-trifluoromethoxy-phenyl)-acryloyloxy]-piperidin]-1-methyl-ethylen];
Poly[1-[1-carbonyl-4-[(E)-3-(3-cyano-phenyl)-acryloyloxy]-piperidin]-1-methyl-ethylen];
Poly[1-[1-carbonyl-4-[(E)-3-(4-cyano-phenyl)-acryloyloxy]-piperidin]-1-methyl-ethylen];
Poly[1-[1-carbonyl-4-[(E)-3-(3-nitro-phenyl)-acryloyloxy]-piperidin]-1-methyl-ethylen];
Poly[1-[1-carbonyl-4-[(E)-3-(4-nitro-phenyl)-acryloyloxy]-piperidin]-1-methyl-ethylen];
Poly[1-[1-carbonyl-4-[(E)-3-(3-chloro-phenyl)-acryloyloxy]-piperidin]-1-methyl-ethylen];
Poly[1-[1-carbonyl-4-[(E)-3-(4-chloro-phenyl)-acryloyloxy]-piperidin]-1-methyl-ethylen];
Poly[1-[1-carbonyl-4-[(E)-3-(3-fluoro-phenyl)-acryloyloxy]-piperidin]-1-methyl-ethylen];
Poly[1-[1-carbonyl-4-[(E)-3-(4-fluoro-phenyl)-acryloyloxy]-piperidin]-1-methyl-ethylen];
Poly[1-[1-carbonyl-4-[(E)-3-(2,4-di-methyl-phenyl)-acryloyloxy]-piperidin]-1-methyl-ethylen];
Poly[1-[1-carbonyl-4-[(E)-3-(2,3-di-methoxy-phenyl)-acryloyloxy]-piperidin]-1-methyl-ethylen];
Poly[1-[1-carbonyl-4-[(E)-3-(2,4-di-methoxy-phenyl)-acryloyloxy]-piperidin]-1-methyl-ethylen];
Poly[1-[1-carbonyl-4-[(E)-3-(3,4-di-methoxy-phenyl)-acryloyloxy]-piperidin]-1-methyl-ethylen];
Poly[1-[1-carbonyl-4-[(E)-3-(3,5-di-methoxy-phenyl)-acryloyloxy]-piperidin]-1-methyl-ethylen];
Poly[1-[1-carbonyl-4-[(E)-3-(3,4-di-cyano-phenyl)-acryloyloxy]-piperidin]-1-methyl-ethylen];
Poly[1-[1-carbonyl-4-[(E)-3-(3,5-di-cyano-phenyl)-acryloyloxy]-piperidin]-1-methyl-ethylen];
Poly[1-[1-carbonyl-4-[(E)-3-(2,4-di-nitro-phenyl)-acryloyloxy]-piperidin]-1-methyl-ethylen];
Poly[1-[1-carbonyl-4-[(E)-3-(3,4-di-chloro-phenyl)-acryloyloxy]-piperidin]-1-methyl-ethylen];
Poly[1-[1-carbonyl-4-[(E)-3-(3,5-di-chloro-phenyl)-acryloyloxy]-piperidin]-1-methyl-ethylen];
Poly[1-[1-carbonyl-4-[(E)-3-(3,4-di-fluoro-phenyl)-acryloyloxy]-piperidin]-1-methyl-ethylen];
Poly[1-[1-carbonyl-4-[(E)-3-(3,5-di-fluoro-phenyl)-acryloyloxy]-piperidin]-1-methyl-ethylen];
Poly[1-[1-carbonyl-4-[(E)-3-(3-bromo-4-fluoro-phenyl)-acryloyloxy]-piperidin]-1-methyl-ethylen];
Poly[1-(1-carbonyl-4-((E)-3-(4-chloro-3-nitro-phenyl)-acryloyloxy]-piperidin]-1-methyl-ethylen];
Poly[1-[1-carbonyl-4-[(E)-3-(2-chloro-4-fluoro-phenyl)-acryloyloxy]-piperidin]-1-methyl-ethylen];
Poly[1-[1-carbonyl-4-[(E)-3-(3-chloro-4-fluoro-phenyl)-acryloyloxy]-piperidin]-1-methyl-ethylen];
Poly[1-[1-carbonyl-4-[(E)-3-(3-fluoro-2-methyl-phenyl)-acryloyloxy]-piperidin]-1-methyl-ethylen];
Poly[1-[1-carbonyl-4-[(E)-3-biphenyl-acryloyloxy]-piperidin]-1-methyl-ethylen];
Poly[1-[1-carbonyl-4-[(E)-3-(4-cyano-4'-biphenyl)-acryloyloxy]-piperidin]-1-methyl-ethylen];
Poly[1-[1-carbonyl-4-[(E)-3-[4-(trans-4-methyl-cyclohexyl)-phenyl]-acryloyloxy]-piperidin]-1-methyl-ethylen];
Poly[1-[1-carbonyl-4-[(E)-3-phenyl-acryloyl]-piperazin]-1-methyl-ethylen];
Poly[1-[1-carbonyl-4-[(E)-3-(4-methyl-phenyl)-acryloyl]-piperazin]-1-methyl-ethylen];
Poly[1-[1-carbonyl-4-[(E)-3-(4-methoxy-phenyl)-acryloyl]-piperazin]-1-methyl-ethylen];
Poly[1-[1-carbonyl-4-[(E)-3-(4-trifluoromethyl-phenyl)-acryloyl]-piperazin]-1-methyl-ethylen];
Poly[1-[1-carbonyl-4-[(E)-3-(4-trifluoromethoxy-phenyl)-acryloyl]-piperazin]-1-methyl-ethylen];
Poly[1-[1-carbonyl-4-[(E)-3-(3-cyano-phenyl)-acryloyl]-piperazin]-1-methyl-ethylen];
Poly[1-(1-carbonyl-4-[(E)-3-(4-cyano-phenyl)-acryloyl]-piperazin]-1-methyl-ethylen];
Poly[1-[1-carbonyl-4-[(E)-3-(3-nitro-phenyl)-acryloyl)-piperazin]-1-methyl-ethylen];
Poly[1-[1-carbonyl-4-[(E)-3-(4-nitro-phenyl)-acryloyl]-piperazin]-1-methyl-ethylen];
Poly[1-[1-carbonyl-4-[(E)-3-(3-chloro-phenyl)-acryloyl]-piperazin]-1-methyl-ethylen];
Poly[1-[1-carbonyl-4-[(E)-3-(4-chloro-phenyl)-acryloyl]-piperazin]-1-methyl-ethylen];
Poly[1-[1-carbonyl-4-[(E)-3-(3-fluoro-phenylpacryloyl]-piperazin]-1-methyl-ethylen];
Poly[1-[1-carbonyl-4-[(E)-3-(4-fluoro-phenyl)-acryloyl]-piperazin]-1-methyl-ethylen];
Poly[1-[1-carbonyl-4-[(E)-3-(2,4-di-methyl-phenyl)-acryloyl]-piperazin]-1-methyl-ethylen];
Poly[1-[1-carbonyl-4-[(E)-3-(2,3-di-methoxy-phenyl)-acryloyl]-piperazin]-1-methyl-ethylen];
Poly[1-[1-carbonyl-4-[(E)-3-(2,4-di-methoxy-phenyl)-acryloyl]-piperazin]-1-methyl-ethylen];
Poly[1-[1-carbonyl-4-[(E)-3-(3,4-di-methoxy-phenyl)-acryloyl]-piperazin]-1-methyl-ethylen];
Poly[1-[1-carbonyl-4-[(E)-3-(3,5-di-methoxy-phenyl)-acryloyl]-piperazin]-1-methyl-ethylen];
Poly[1-[1-carbonyl-4-[(E)-3-(3,4-di-cyano-phenyl)-acryloyl]-piperazin]-1-methyl-ethylen];
Poly[1-[1-carbonyl-4-[(E)-3-(3,5-di-cyano-phenyl)-acryloyl]-piperazin]-1-methyl-ethylen];
Poly[1-[1-carbonyl-4-[(E)-3-(2,4-di-nitro-phenyl)-acryloyl]-piperazin]-1-methyl-ethylen];
Poly[1-[1-carbonyl-4-[(E)-3-(3,4-di-chloro-phenyl)-acryloyl]-piperazin]-1-methyl-ethylen];
Poly[1-[1-carbonyl-4-[(E)-3-(3,5-di-chloro-phenyl)-acryloyl]-piperazin]-1-methyl-ethylen];
Poly[1-[1-carbonyl-4-[(E)-3-(3,4-di-fluoro-phenyl)-acryloyl]-piperazin]-1-methyl-ethylen];
Poly[1-[1-carbonyl-4-[(E)-3-(3,5-di-fluoro-phenyl)-acryloyl]-piperazin]-1-methyl-ethylen];
Poly[1-[1-carbonyl-4-[(E)-3-(4-chloro-3-nitro-phenyl)-acryloyl]-piperazin]-1-methyl-ethylen];
Poly[1-[1-carbonyl-4-[(E)-3-(2-chloro-4-fluoro-phenyl)-acryloyl]-piperazin]-1-methyl-ethylen];
Poly[1-[1-carbonyl-4-[(E)-3-(3-chloro-4-fluoro-phenyl)-acryloyl]-piperazin]-1-methyl-ethylen];
Poly[1-[1-carbonyl-4-[(E)-3-(3-fluoro-2-methyl-phenyl)-acryloyl]-piperazin]-1-methyl-ethylen];
Poly[1-[1-carbonyl-4-[(E)-3-(4-cyano-4'-biphenyl)-acryloyl]-piperazin]-1-methyl-ethylen];
Poly[1-[1-carbonyl-4-[(E)-3-[4-(trans-4-methyl-cyclohexyl)-phenyl]-acryloyl]-piperazin]-1-methyl-ethylen];
Poly[1-[1-[(E)-3-(4-methyl-phenyl)-acryloyl]-piperidin-4-yloxycarbonyl]-ethylen];
Poly[1-[1-[(E)-3-(4-methoxy-phenyl)-acryloyl]-piperidin-4-yloxycarbonyl]-ethylen];
Poly[1-[1-[(E)-3-(4-trifluoromethyl-phenyl)-acryloyl]-piperidin-4-yloxycarbonyl]-ethylen];
Poly[1-[1-[(E)-3-(4-trifluoromethoxy-phenyl)-acryloyl]-piperidin-4-yloxycarbonyl]-ethylen];
Poly[1-[1-[(E)-3-(3-cyano-phenyl)-acryloyl]-piperidin-yloxycarbonyl]-ethylen];
Poly[1-[1-[(E)-3-(4-cyano-phenyl)-acryloyl]-piperidin-4-yloxycarbonyl]-ethylen];
Poly[1-[1-[(E)-3-(3-nitro-phenyl)-acryloyl]-piperidin-4-yloxycarbonyl]-ethylen];
Poly[1-(1-[(E)-3-(4-nitro-phenyl)-acryloyl]-piperidin-4-yloxycarbonyl]-ethylen];
Poly[1-[1-[(E)-3-(3-chloro-phenyl)-acryloyl]-piperidin-4-yloxycarbonyl]-ethylen];
Poly[1-[1-[(E)-3-(4-chloro-phenyl)-acryloyl]-piperidin-4-yloxycarbonyl]-ethylen];
Poly[1-[1-[(E)-3-(3-fluoro-phenyl)-acryloyl]-piperidin-4-yloxycarbonyl]-ethylen];
Poly[1-[1-[(E)-3-(4-fluoro-phenyl)-acryloyl]-piperidin-4-yloxycarbonyll-ethylen];
Poly[1-[1-[(E)-3-(2,4-di-methyl-phenyl)-acryloyl]-piperidin-4-yloxycarbonyl]-ethylen];
Poly[1-[1-[(E)-3-(2,3-di-methoxy-phenyl)-acryloyl]-piperidin-4-yloxycarbonyl]-ethylen];
Poly[1-[1-[(E)-3-(2,4-di-methoxy-phenyl)-acryloyl]-piperidin-4-yloxycarbonyl]-ethylen];
Poly[1-[1-[(E)-3-(3,4-di-methoxy-phenyl)-acryloyl]-piperidin-4-yloxycarbonyl]-ethylen];
Poly[1-[1-[(E)-3-(3,5-di-methoxy-phenyl)-acryloyl]-piperidin-4-yloxycarbonyl]-ethylen];
Poly[1-[1-[(E)-3-(3,4-di-cyano-phenyl)-acryloyl]-piperidin-4-yloxycarbonyl]-ethylen];
Poly[1-[1-[(E)-3-(3,5-di-cyano-phenyl)-acryloyl]-piperidin-4-yloxycarbonyl]-ethylen];
Poly[1-[1-[(E)-3-(2,4-di-nitro-phenyl)-acryloyl]-piperidin-4-yloxycarbonyl]-ethylen];
Poly[1-[1-[(E)-3-(3,4-di-chloro-phenyl)-acryloyl]-piperidin-4-yloxycarbonyl]-ethylen];
Poly[1-[1-[(E)-3-(3,5-di-chloro-phenyl)-acryloyl]-piperidin-4-yloxycarbonyl]-ethylen];
Poly[1-[1-[(E)-3-(3,4-di-fluoro-phenyl)-acryloyl]-piperidin-4-yloxycarbonyl]-ethylen];
Poly[1-[1-[(E)-3-(3,5-di-fluoro-phenyl)-acryloyl]-piperidin-4-yloxycarbonyl]-ethylen];
Poly[1-[1-[(E)-3-(3-bromo-4-fluoro-phenyl)-acryloyl]-piperidin-4-yloxycarbonyl]-ethylen];
Poly[1-[1-[(E)-3-(4-chloro-3-nitro-phenyl)-acryloyl]-piperidin-4-yloxycarbonyl]-ethylen];
Poly[1-[1-[(E)-3-(2-chloro-4-fluoro-phenyl)-acryloyl]-piperidin-4-yloxycarbonyl]-ethylen];
Poly[1-[1-[(E)-3-(3-chloro-4-fluoro-phenyl)-acryloyl]-piperidin-4-yloxycarbonyl]-ethylen];
Poly[1-[1-[(E)-3-(3-fluoro-2-methyl-phenyl)-acryloyl]-piperidin-4-yloxycarbonyl]-ethylen];
Poly[1-[1-[(E)-3-(4-cyano-4'-biphenyl)-acryloyl]-piperidin-4-yloxycarbonyl]-ethylen];
Poly[1-[1-[(E)-3-[4-(trans-4-methyl-cyclohexyl)-phenyl]-acryloyl]-piperidin-4-yloxycarbonyl]-ethylen];
Poly[1-[1-carbonyl-4-[(E)-3-(4-methyl-phenyl)-acryloyloxy]-piperidin]-ethylen];
Poly[1-[1-carbonyl-4-[(E)-3-(4-methoxy-phenyl)-acryloyloxy]-piperidin]-ethylen];
Poly[1-[1-carbonyl-4-[(E)-3-(4-trifluoromethyl-phenyl)-acryloyloxy]-piperidin]-ethylen];
Poly[1-[1-carbonyl-4-[(E)-3-(4-trifluoromethoxy-phenyl)-acryloyloxy]-piperidin]-ethylen];
Poly[1-[1-carbonyl-4-[(E)-3-(3-cyano-phenyl)-acryloyloxy]-piperidin]-ethylen];
Poly[1-[1-carbonyl-4-[(E)-3-(4-cyano-phenyl)-acryloyloxy]-piperidin]-ethylen];
Poly[1-[1-carbonyl-4-[(E)-3-(3-nitro-phenyl)-acryloyloxy]-piperidin]-ethylen];
Poly[1-[1-carbonyl-4-[(E)-3-(4-nitro-phenyl)-acryloyloxy]-piperidin]-ethylen];
Poly[1-[1-carbonyl-4-[(E)-3-(3-chloro-phenyl)-acryloyloxy]-piperidin]-ethylen];
Poly[1-[1-carbonyl-4-[(E)-3-(4-chloro-phenyl)-acryloyloxy]-piperidin]-ethylen];
Poly[1-[1-carbonyl-4-[(E)-3-(3-fluoro-phenyl)-acryloyloxy]-piperidin]-ethylen];
Poly[1-[1-carbonyl-4-[(E)-3-(4-fluoro-phenyl)-acryloyloxy]-piperidin]-ethylen];
Poly[1-[1-carbonyl-4-[(E)-3-(2,4-di-methyl-phenyl)-acryloyloxy]-piperidin]-ethylen];
Poly[1-[1-carbonyl-4-[(E)-3-(2,3-di-methoxy-phenyl)-acryloyloxy]-piperidin]-ethylen];
Poly[1-[1-carbonyl-4-[(E)-3-(2,4-di-methoxy-phenyl)-acryloyloxy]-piperidin]-ethylen];
Poly[1-[1-carbonyl-4-[(E)-3-(3,4-di-methoxy-phenyl)-acryloyloxy]-piperidin]-ethylen];
Poly[1-[1-carbonyl-4-[(E)-(3-(3,5-di-methoxy-phenyl)-acryloyloxy]-piperidin]-ethylen];
Poly[1-[1-carbonyl-4-[(E)-3-(3,4-di-cyano-phenyl)-acryloyloxy]-piperidin]-ethylen];
Poly[1-[1-carbonyl-4-[(E)-3-(3,5-di-cyano-phenyl)-acryloyloxy]-piperidin]-ethylen];
Poly[1-[1-carbonyl-4-[(E)-3-(2,4-di-nitro-phenyl)-acryloyloxy]-piperidin]-ethylen];
Poly[1-[1-carbonyl-4-[(E)-3-(3,4-di-chloro-phenyl)-acryloyloxy]-piperidin]-ethylen];
Poly[1-[1-carbonyl-4-[(E)-3-(3,5-di-chloro-phenyl)-acryloyloxy]-piperidin]-ethylen];
Poly[1-[1-carbonyl-4-[(E)-3-(3,4-di-fluoro-phenyl)-acryloyloxy]-piperidin]-ethylen];
Poly[1-[1-carbonyl-4-[(E)-3-(3,5-di-fluoro-phenyl)-acryloyloxy]-piperidin]-ethylen];
Poly[1-[1-carbonyl(4-[(E)-3-(3-bromo-4-fluoro-phenyl)-acryloyloxy]-piperidin]-ethylen];
Poly[1-[1-carbonyl-4-[(E)-3-(4-chloro-3-nitro-phenyl)-acryloyloxy]-piperidin]-ethylen];
Poly[1-[1-carbonyl-4-[(E)-3-(2-chloro-4-fluoro-phenyl)-acryloyloxy]-piperidin]-ethylen];
Poly[1-[1-carbonyl-4-[(E)-3-(3-chloro-4-fluoro-phenyl)-acryloyloxy]-piperidin]-ethylen];
Poly[1-[1-carbonyl-4-[(E)-3-(4-cyano-4'-biphenyl)-acryloyloxy]-piperidin]-ethylen];
Poly[1-[1-carbonyl-4-[(E)-3-[4-(trans-4-methyl-cyclohexyl)-phenyl]-acryloyloxy]-piperidin]-ethylen];
Poly[1-[1-carbonyl-4-[(E)-3-phenyl-acryloyl]-piperazin]-ethylen];
Poly[1-[1-carbonyl-4-[(E)-3-(4-methyl-phenyl)-acryloyl]-piperazin]-ethylen];
Poly[1-[1-carbonyl-4-[(E)-3-(4-methoxy-phenyl)-acryloyl]-piperazin]-ethylen];
Poly[1-[1-carbonyl-4-[(E)-3-(4-trifluoromethyl-phenyl)-acryloyl]-piperazin]-ethylen];
Poly[1-[1-carbonyl-4-[(E)-3-(4-trifluoromethoxy-phenyl)-acryloyl]-piperazin]-ethylen];
Poly[1-[1-carbonyl-4-[(E)-3-(3-cyano-phenyl)-acryloyl]-piperazin]-ethylen];
Poly[1-[1-carbonyl-4-[(E)-3-(4-cyano-phenyl)-acryloyl]-piperazin]-ethylen];
Poly[1-[1-carbonyl-4-[(E)-3-(3-nitro-phenyl)-acryloyl]-piperazin]-ethylen];
Poly[1-[1-carbonyl-4-[(E)-3-(4-nitro-phenyl)-acryloyl]-piperazin]-ethylen];
Poly[1-[1-carbonyl-4-[(E)-3-(3-chloro-phenyl)-acryloyl]-piperazin]-ethylen];
Poly[1-[1-carbonyl-4-((E)-3-(4-chloro-phenyl)-acryloyl]-piperazin]-ethylen];
Poly[1-[1-carbonyl-4-[(E)-3-(2-fluoro-phenyl)-acryloyl]-piperazin]-ethylen];
Poly[1-[1-carbonyl-4-[(E)-3-(3-fluoro-phenyl)-acryloyl]-piperazin]-ethylen];
Poly[1-[1-carbonyl-4-[(E)-3-(4-fluoro-phenyl)-acryloyl]-piperazin]-ethylen];
Poly[1-[1-carbonyl-4-[(E)-3-(2,4-di-methyl-phenyl)-acryloyl]-piperazin]-ethylen];
Poly[1-[1-carbonyl-4-[(E)-3-(2,3-di-methoxy-phenyl)-acryloyl]-piperazin]-ethylen];
Poly[1-[1-carbonyl-4-[(E)-3-(2,4-di-methoxy-phenyl)-acryloyl]-piperazin]-ethylen];
Poly[1-[1-carbonyl-4-[(E)-3-(3,4-di-methoxy-phenyl)-acryloyl]-piperazin]-ethylen];
Poly[1-[1-carbonyl-4-[(E)-3-(3,5-di-methoxy-phenyl)-acryloyl]-piperazin]-ethylen];
Poly[1-[1-carbonyl-4-[(E)-3-(3,4-di-cyano-phenyl)-acryloyl]-piperazin]-ethylen];
Poly[1-[1-carbonyl-4-[(E)-3-(3,5-di-cyano-phenyl)-acryloyl]-piperazin]-ethylen];
Poly[1-[1-carbonyl-4-[(E)-3-(2,4-di-nitro-phenyl)-acryloyl]-piperazin]-ethylen];
Poly[1-[1-carbonyl-4-[(E)-3-(3,4-di-chloro-phenyl)-acryloyl]-piperazin]-ethylen];
Poly[1-[1-carbonyl-4-[(E)-3-(3,5-di-chloro-phenyl)-acryloyl]-piperazin]-ethylen];
Poly[1-[1-carbonyl-4-[(E)-3-(3,4-di-fluoro-phenyl)-acryloyl]-piperazin]-ethylen];
Poly[1-[1-carbonyl-4-[(E)-3-(3,5-di-fluoro-phenyl)-acryloyl]-piperazin]-ethylen];
Poly[1-[1-carbonyl-4-[(E)-3-(3-bromo-4-fluoro-phenyl)-acryloyl]-piperazin]-ethylen];
Poly[1-[1-carbonyl-4-[(E)-3-(4-chloro-3-nitro-phenyl)-acryloyl]-piperazin]-ethylen];
Poly[1-[1-carbonyl-4-[(E)-3-(2-chloro-4-fluoro-phenyl)-acryloyl]-piperazin]-ethylen];
Poly[1-[1-carbonyl-4-[(E)-3-(3-chloro-4-fluoro-phenyl)-acryloyl]-piperazin]-ethylen];
Poly[1-[1-carbonyl-4-[(E)-3-(4-cyano-4'-biphenyl)-acryloyl]-piperazin]-ethylen];
Poly[1-[1-carbonyl-4-[(E)-3-[4-(trans-4-methyl-cyclohexyl)-phenyl]-acryloyl]-piperazin]-ethylen].

## Patentansprüche

1. Polymere der allgemeinen Formel I 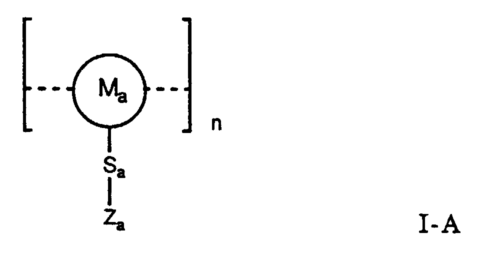 worin
Mₐ Monomer-Einheiten für Homopolymere aus der Gruppe Acrylat, Methacrylat, 2-Chloracrylat, Acrylamid, Methacrylamid, 2-Chloracrylamid oder Styrol-Derivate bedeutet;
Sₐ eine Spacer-Einheit aus der Gruppe Methylen, 1,2-Ethylen, 1,3-Propylen, 1,4-Butylen, 1,2-Propylen, 1,3-Butylen, Cyclopentan-1,2-diyl, Cyclopentan-1,3-diyl, Cyclohexan-1,3-diyl, Cyclohexan-1,4-diyl, Piperidin-1,4-diyl, Piperazin-1,4-diyl, 1,2-Phenylen, 1,3-Phenylen, 1,4-Phenylen, Ethylenoxy, Ethylenoxycarbonyl, Ethylencarboxyl, -CONH-, bedeutet;
n eine Grösse von 4 - 100 000 ist;
Zₐ eine Molekül-Einheit, die photochemische Isomerisierung/ Dimerisierung eingehen kann, der allgemeinen Formel II 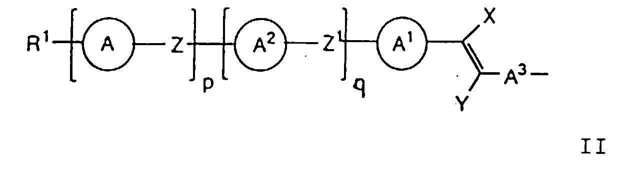
worin
Ring A¹ unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, 1,4- oder 2,6-Naphthylen, in welchem eine CH-Gruppe durch Stickstoff ersetzt sein kann, bedeutet;
Ring A, A² unabhängig voneinander unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, trans-1,4-Cyclohexylen, trans-1,3-Dioxan-2,5-diyl oder 1,4-Piperidyl bedeutet;
A³ -COO-, -CONH-, -CO-E-, unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, 1,4- oder 2,6-Naphthylen, in welchem eine CH-Gruppe durch Stickstoff ersetzt sein kann, darstellt;
E unsubstituiertes oder mit Halogen, Cyano und/oder Nitro substituiertes 1,4-Phenylen, in welchem 1 oder 2 CH-Gruppen durch Stickstoff ersetzt sein können, oder 2,5-Thiophendiyl, 2,5-Furanylen, 1,4- oder 2,6-Naphthylen, in welchem eine CH-Gruppe durch Stickstoff ersetzt sein kann, bedeutet;
Z, Z¹ unabhängig voneinander eine einfache Kovalenzbindung, -CH₂CH₂-, -COO-, -OOC-, -OCH₂-, -CH₂O-, -C≡C-, -(CH₂)₄-, -O(CH₂)₃-, -(CH₂)₃O- oder die trans-Form von -OCH₂CH=CH-, -CH=CHCH₂O-, -(CH₂)₂CH=CH- oder -CH=CH(CH₂)₂- darstellt;
R¹ Wasserstoff, Halogen, Cyano, Nitro, NCS, gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, -OOC-, -CO- und/oder eine -CH₂CH₂-Gruppe durch -CH=CH- ersetzt sein können, bedeutet;
q, p unabhängig voneinander 0 oder 1 sind;
X,Y unabhängig voneinander Wasserstoff, Halogen, Cyano, gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, -OOC-, -CO- und/oder -CH=CH- ersetzt sein können, bedeutet.

2. Polymere gemäss Anspruch 1, dadurch gekennzeichnet, dass die Isomeriserungs-/Dimerisierungs-Einheit Zₐ einen Rest der allgemeinen Formeln 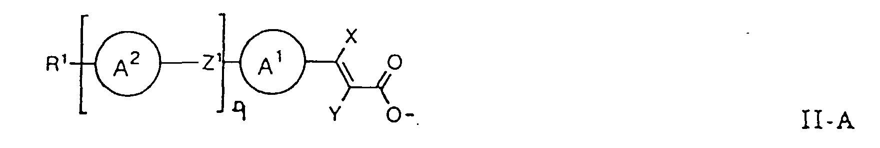 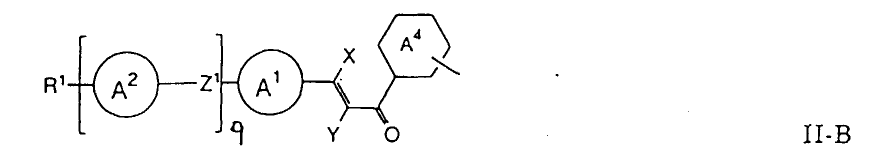 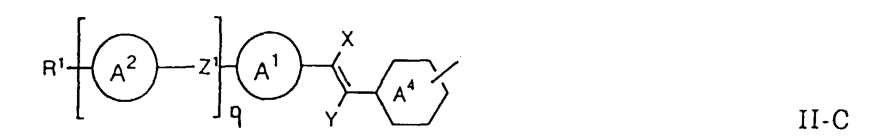 bedeutet, worin
Ring A¹ unsubstituiertes oder mit Halogen, Cyano und/oder Nitro substituiertes 1,4-Phenylen, oder Pyrimidin-2,5-diyl, Pyridin-2,5-diyl, 2,5-Thiophendiyl, 2,5-Furanylen, 1,4-Naphthylen oder 2,6-Naphthylen darstellt;
Ring A² unsubstituiertes oder mit Halogen, Cyano und/oder Nitro substituiertes 1,4-Phenylen, oder Pyrimidin-2,5-diyl, Pyridin-2,5-diyl, 2,5-Thiophendiyl, 2,5-Furanylen, trans-1,4-Cyclohexylen, trans-1,3-Dioxan-2,5-diyl oder 1,4-Piperidyl bedeutet;
Ring A⁴ unsubstituiertes oder mit Halogen, Cyano und/oder Nitro substituiertes 1,4-Phenylen bedeutet;
Z¹ eine einfache Kovalenzbindung, -CH₂CH₂-, -COO-, -OCH₂-, -(CH₂)₄-, -O(CH₂)₃- oder -(CH₂)₃O- darstellt;
R¹ Wasserstoff, Halogen, Cyano, Nitro, gegebenenfalls mit Fluor substituiertes Alkyl mit 1 bis 12 Kohlenstoffatomen, in welchen gegebenenfalls 1 oder 2 nicht benachbarte -CH₂-Gruppen durch Sauerstoff, -COO-, und/oder eine -CH₂CH₂-Gruppe durch -CH=CH- ersetzt sein können, bedeutet;
q 0 oder 1 ist;
X Wasserstoff oder gegebenenfalls mit Halogen substituiertes Alkyl mit 1 bis 6 Kohlenstoffatomen darstellt;
Y Wasserstoff, Cyano, -COO-Alkyl, gegebenenfalls mit Fluor substituiertes Alkyl mit 1 bis 6 Kohlenstoffatomen bedeutet.

3. Polymere gemäss einem der Ansprüche 1 oder 2, dadurch gekennzeichnet, dass die Isomeriserungs-/Dimerisierungs-Einheit Zₐ einen Rest der allgemeinen Formeln 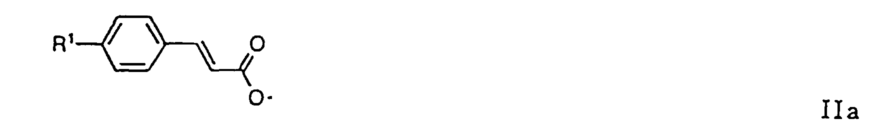 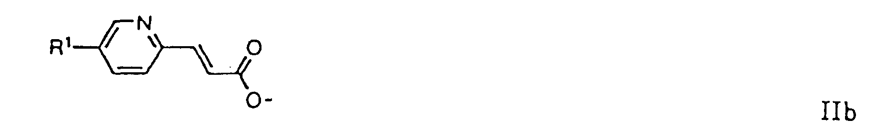 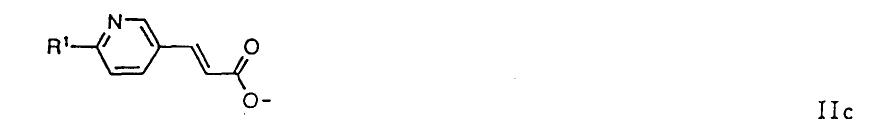 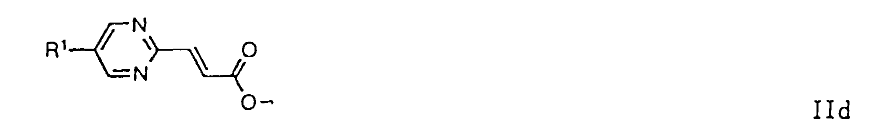 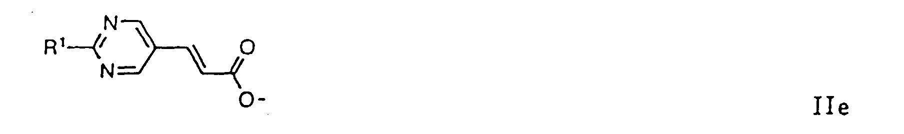 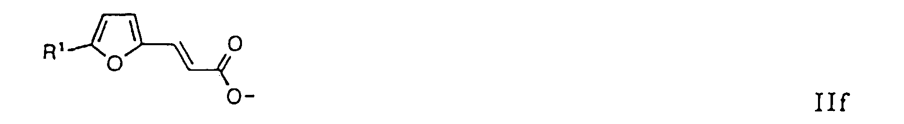 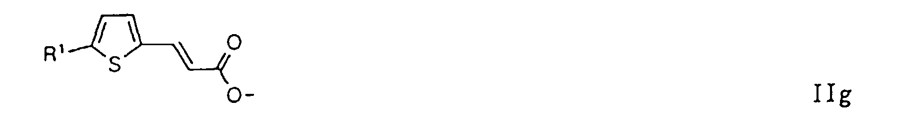 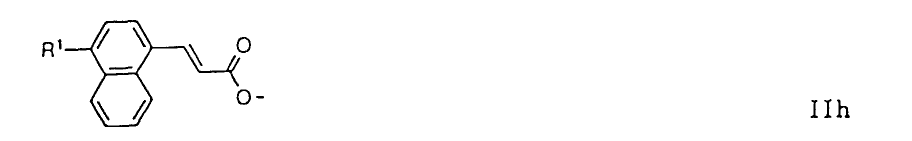 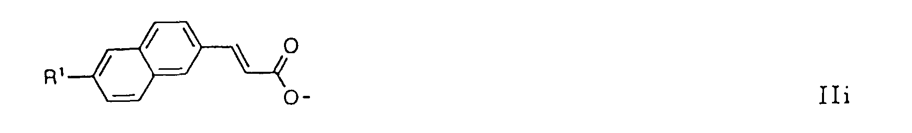 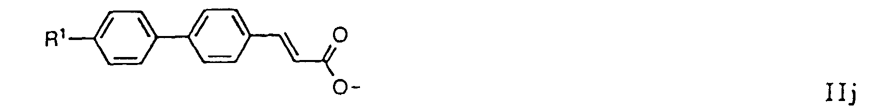 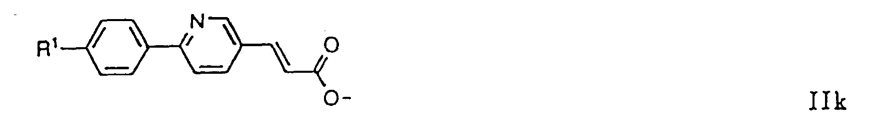 bedeutet, worin
R¹ Wasserstoff, Halogen, Cyano, Nitro, Alkyl oder Alkoxy mit 1 bis 6 Kohlenstoffatomen bedeutet.

4. Verwendung von linearen und cyclischen Polymeren oder Oligomeren mit einer photoreaktiven Ethen-Gruppe gemäss einem der Ansprüche 1 bis 3 als Orientierungsschicht für Flüssigkristalle.

## Claims

1. Polymers of general formula I 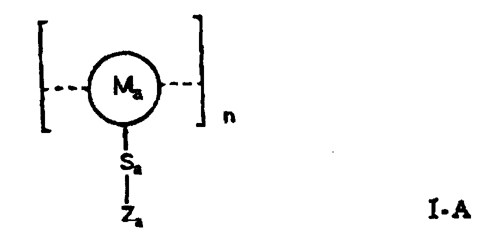 wherein
Mₐ signify monomer units for homopolymers selected from the group consisting of acrylate, methacrylate, 2-chloroacrylate, acrylamide, methacrylamide, 2-chloroacrylamide or stryrene derivatives;
Sₐ represent a spacer unit selected from the group consisting of methylene, 1,2-ethylene, 1,3-propylene, 1,4-butylene, 1,2-propylene, 1,3-butylene, cyclopentane-1.2-diyl, cyclopentane-1,3-diyl, cyclohexane-1,3-diyl, cyclohexane-1,4-diyl, piperidine-1,4-diyl, piperazine-1,4-diyl, 1,2-phenylene, 1,3-phenylene, 1,4-phenylene, ethyleneoxy, ethyleneoxycarbonyl, ethylenecarboxyl, -CONH- ;
n is a magnitude of 4 - 100'000;
Zₐ represent a molecule unit of general formula II, which can undergo photochemical isomerization/dimerization, 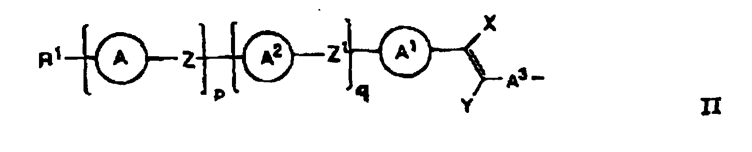
wherein
ring A¹ signifies 1,4-phenylene, which is unsubstituted or substitued with halogen, cyano and/or nitro and in which 1 or 2 CH groups can be replaced by nitrogen, or 2,5-thiophenediyl, 2,5-furanylene, 1,4- or 2,6-naphthylene, in which a CH group can be replaced by nitrogen;
ring A,A² each individually signify 1,4-phenylene, which is unsubstituted or substituted with halogen, cyano and/or nitro and in which 1 or 2 CH groups can be replaced by nitrogen, or 2,5-thiophene-diyl, 2,5-furanylene, trans-1,4-cyclohexylene, trans-1,3-dioxane-2, 5-diyl or 1,4-piperidyl;
ring A³ signifies -COO-, -CONH-, -CO-E-, 1,4-phenylene, which is unsubstituted or substituted with halogen, cyano and/or nitro and in which 1 or 2 CH groups can be replaced by nitrogen, or 2,5-thiophene-diyl, 2,5-furanylene, 1,4- or 2,6-naphthylene, in which a CH group can be replaced by nitrogen;
E signifies 1,4-phenylene, which is unsubstituted or substituted with halogen, cyano and/or nitro and in which 1 or 2 CH groups can be replaced by nitrogen, or 2,5-thiophene-diyl, 2,5-furanylene, 1,4- or 2,6-naphthylene, in which a CH group can be replaced by nitrogen;
Z,Z¹ each independently signify a single covalent bond, -CH₂CH₂-, -COO-, -OOC-, -OCH₂-, -CH₂O-, -C≡C-, -(CH₂)₄-, -O(CH₂)₃-, -(CH₂)₃O- or the trans form of -OCH₂CH=CH-, -CH-CHCH₂O-, -(CH₂)₂CH=CH- or -CH=CH(CH₂)₂-;
R1 signifies hydrogen, halogen, cyano, nitro, NCS, alkyl with 1 to 12 carbon atoms, which is optionally substituted with fluorine and in which optionally 1 or 2 non-adjacent -CH₂- groups can be replaced by oxygen, -COO-, -OOC-, -CO- and/or a -CH₂CH₂- group can be replaced by -CH=CH-;
q,p each independently signify 0 or 1;
X, Y each independently signify hydrogen, halogen cyano, alkyl with 1 to 12 carbon atoms which is optionally substituted with fluorine and in which optionally 1 or 2 non-adjacent -CH₂- groups can be replaced by oxygen, -COO-, -OOC-, -CO- and/or -CH=CH-.

2. Polymers according to claim 1, characterized in that the isomerization/dimerization unit Zₐ have the general formula 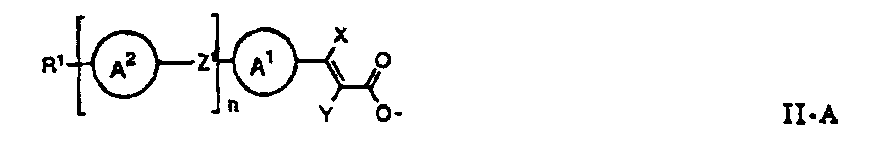 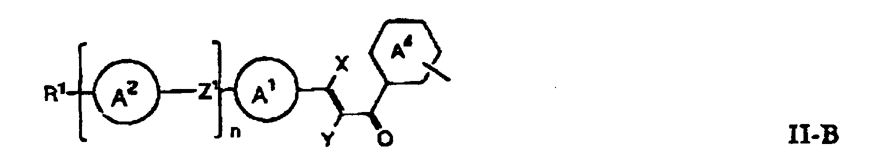 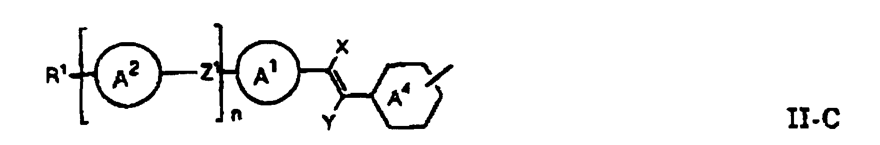 wherein
ring A¹ signifies 1,4-phenylene, which is unsubstituted or substituted with halogen, cyano and/or nitro, or pyrimidine-2,5-diyl, pyridine-2,5-diyl, 2,5-thiophenediyl, 2,5-furanylene, 1,4-naphthylene or 2,6-naphthylene;
ring A¹ signifies 1,4-phenylene, which is unsubstituted or substituted with halogen, cyano and/or nitro, or pyrimidine-2, 5-diyl, pyridine-2,5-diyl, 2, 5-thiophenediyl, 2,5-furanylene, trans-1,4-cyclohexylene, trans-1,3-dioxane-2,5-diyl or 1,4-piperidyl;
ring A⁴ signifies 1,4-phenylene, which is unsubstituted or substituted with halogen, cyano and/or nitro;
Z¹ signifies a single covalent bond, -CH₂CH₂-, -COO-, -OCH₂-, -(CH₂)₄-, -O(CH₂)₃- or -(CH₂)₃O-;
R¹ signifies hydrogen, halogen, cyano, nitro, alkyl with 1 to 12 carbon atoms, which is optionally substituted with fluorine and in which optionally 1 or 2 non-adjacent -CH₂- groups can be replaced by oxygen or -COO- and/or a -CH₂CH₂- group can be replaced by -CH=CH-;
q signifies 0 or 1;
X signifies hydrogen or alkyl with 1 to 6 carbon atoms, which is optionally substituted with halogen;
Y signifies hydrogen, cyano, -COO-alkyl, alkyl with 1 to 6 carbon atoms, which is optionally substituted with fluorine.

3. Polymers according to one of claims 1 or 2, characterized in that the isomerization/dimerization unit Zₐ have the general formula 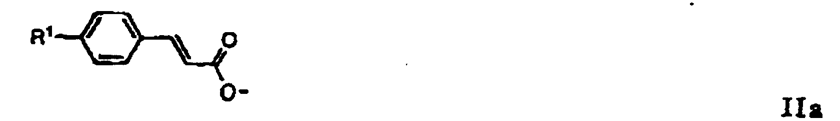 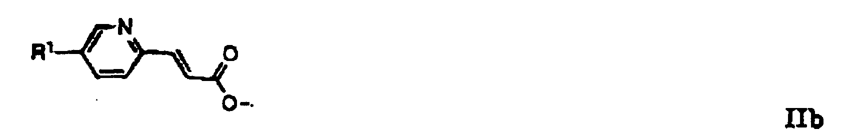 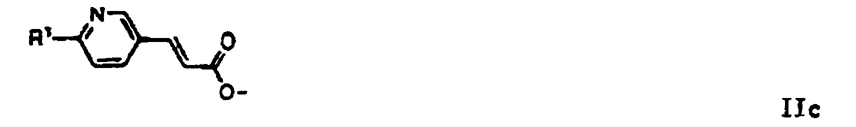 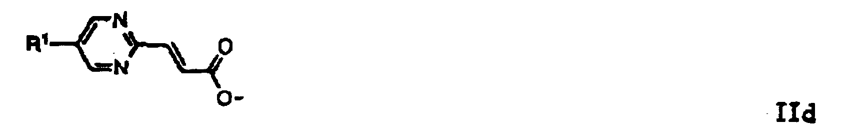 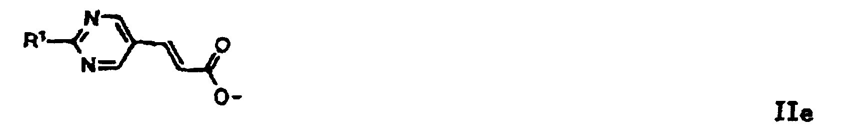 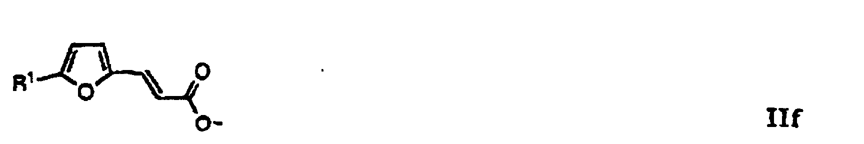 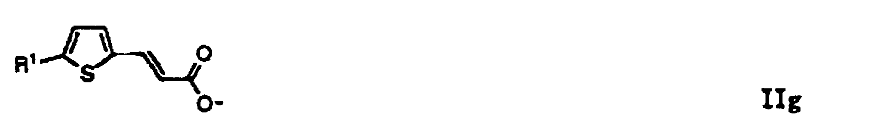 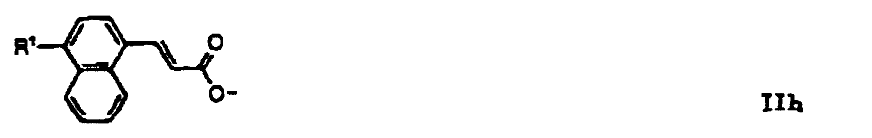 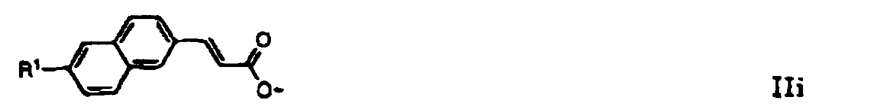 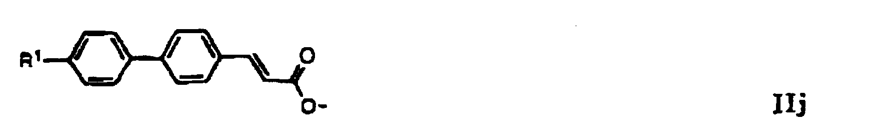 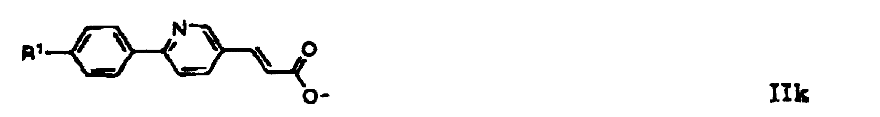 wherein
R¹ signifies hydrogen, halogen, cyano, nitro, alkyl or alkoxy with 1 to 6 carbon atoms.

4. The use of linear and cyclic polymers or oligomers having a photoreactive ethene group in accordance with any one of claims 1 to 3 as an orientating layer for liquid crystals.

## Revendications

1. Polymères de formule générale I 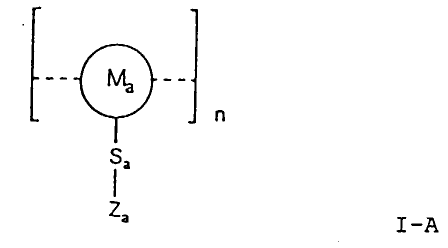 dans laquelle
Mₐ représente des motifs monomères pour des homopolymères choisis parmi les groupes acrylate, méthacrylate, 2-chloroacrylate, acrylamide, méthacrylamide, 2-chloroacrylamide ou des dérivés du styrène;
Sₐ représente un motif d'espacement choisi parmi les groupes méthylène, 1,2-éthylène, 1,3-propylène, 1,4-butylène, 1,2-propylène, 1,3-butylène, cyclopentan-1,2-diyle, cyclopentane-1,3-diyle, cyclohexane-1,3-diyle, cyclohexane-1,4-diyle, pipéridine-1,4-diyle, pipérazine-1,4-diyle, 1,2-phénylène, 1,3-phénylène, 1,4-phénylène, éthylènoxy, éthylènoxycarbonyle, éthylènecarbonyle, -CONH-;
n est une grandeur de 4 - 100 000;
Zₐ représente un motif moléculaire, qui peut se lier chimiquement par isomérisation/dimérisation photochimique, de formule générale II: 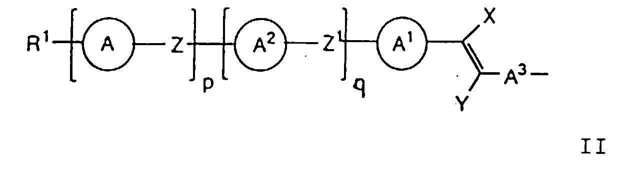
dans laquelle
le cycle A¹ représente un groupe 1,4-phénylène non substitué ou substitué avec un atome d'halogène, un groupe- cyano et/ou nitro, dans lequel 1 ou 2 groupes CH peuvent être remplacés par un atome d'azote, ou un groupe 2,5-thiophèndiyle, 2,5-furanylène, 1,4- ou 2,6-naphtylène, dans lequel un groupe CH peut être remplacé par un atome d'azote;
les cycles A, A² représentent indépendamment l'un de l'autre un groupe 1,4-phénylène non substitué ou substitué avec un atome d'halogène, un groupe cyano et/ou nitro, dans lequel 1 ou 2 groupes CH peuvent être remplacés par un atome d'azote, ou un groupe 2,5-thiophèndiyle, 2,5-furanylène, trans-1,4-cyclohexylène, trans-1,3-dioxann-2,5-diyle ou 1,4-pipéridyle;
A³ représente un groupe -COO-, -CONH-, -CO-E, 1,4-phénylène non substitué ou substitué avec un atome d'halogène, un groupe cyano et/ou nitro, dans lequel 1 ou 2 groupes CH peuvent être remplacés par un atome d'azote, ou un groupe 2,5-thiophèndiyle, 2,5-furanylène, 1,4- ou 2,6-naphtylène, dans lequel un groupe CH peut être remplacé par un atome d'azote;
E représente un groupe 1,4-phénylène non substitué ou substitué avec un atome d'halogène, un groupe cyano et/ou nitro, dans lequel 1 ou 2 groupes CH peuvent être remplacés par un atome d'azote, ou un groupe 2,5-thiophèndiyle, 2, 5-furanylène, 1,4- ou 2,6-naphtylène, dans lequel un groupe CH peut être remplacé par un atome d'azote;
Z, Z¹ représentent indépendamment l'un de l'autre une simple liaison de covalence, un groupe -CH₂CH₂-, -COO-, -OOC-, -OCH₂, -CH₂O, -C≡C-, -(CH₂)₄-, -O(CH₂)₃-, -(CH₂)₃O-, ou la forme trans de -OCH₂CH=CH-, -CH=CHCH₂O-, -(CH₂)₂CH=CH- ou -CH=CH(CH₂)₂-;
R¹ représente un atome d'hydrogène, d'halogène, un groupe cyano, nitro, NCS, alkyle avec 1 à 12 atomes de carbone, éventuellement substitué avec du fluor, dans lequel éventuellement 1 ou 2 groupes -CH₂- non voisins peuvent être remplacés par un atome d'oxygène, un groupe -COO-, -OOC-, -CO-, et/ou un groupe -CH₂CH₂- par -CH=CH-;
q, p sont indépendamment l'un de l'autre 0 ou 1;
X, Y représentent indépendamment l'un de l'autre un atome d'hydrogène, d'halogène, un groupe cyano, alkyle avec 1 à 12 atomes de carbone, éventuellement substitué avec du fluor, dans lequel éventuellement 1 ou 2 groupes -CH₂- non voisins peuvent être remplacés par un atome d'oxygène, un groupe -COO-, -OOC-, -CO-, et/ou -CH=CH-.

2. Polymères selon la revendication 1, caractérisés en ce que, le motif d'isomérisation/dimérisation Zₐ représente un groupe de formules générales 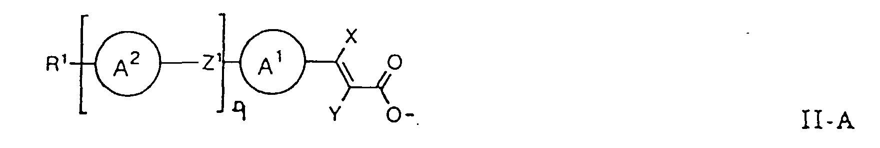 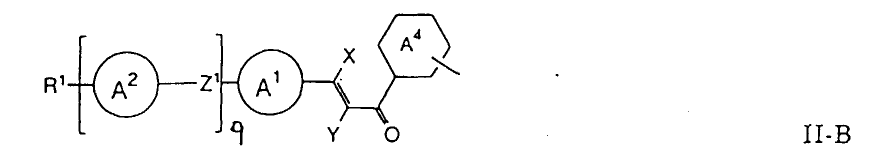 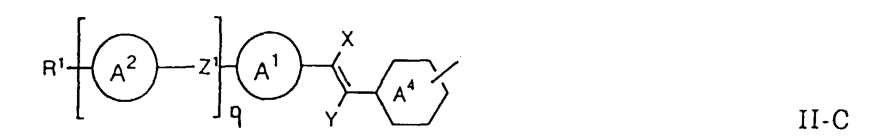 dans lesquelles
le cycle A¹ représente un groupe 1,4-phénylène non substitué ou substitué avec un atome d'halogène, un groupe cyano et/ou nitro, ou pyrimidin-2,5-diyle, pyridin-2,5-diyle, 2,5-thiophèndiyle, 2,5-furanylène, 1,4-naphtylène ou 2,6-naphtylène;
le cycle A² représente un groupe 1,4-phénylène non substitué ou substitué avec un atome d'halogène, un groupe cyano et/ou nitro, ou pyrimidin-2,5-diyle, pyridin-2,5-diyle, 2,5-thiophèndiyle, 2,5-furanylène, trans-1,4-cyclohexylène, trans-1,3-dioxann-2,5-diyle ou 1,4-pipéridyle;
le cycle A⁴ représente un groupe 1,4-phénylène non substitué ou substitué avec un atome d'halogène, un groupe cyano et/ou nitro;
Z¹ représente une simple liaison de covalence, un groupe -CH₂CH₂-, -COO-, -OCH₂-, -(CH₂)₄-, -O(CH₂)₃-, ou -(CH₂)₃O-;
R¹ représente un atome d'hydrogène, d'halogène, un groupe cyano, nitro, alkyle avec 1 à 12 atomes de carbone, éventuellement substitué avec du fluor, dans lequel éventuellement 1 ou 2 groupes -CH₂- non voisins peuvent être remplacés par un atome d'oxygène, et/ou un groupe -CH₂CH₂- par -CH=CH-;
q est 0 ou 1;
X représente un atome d'hydrogène, ou un groupe alkyle avec 1 à 6 atomes de carbone, éventuellement substitué avec un atome d'halogène;
Y représente un atome d'hydrogène, un groupe cyano, -COO-alkyle, alkyle avec 1 à 6 atomes de carbone, éventuellement substitué avec du fluor.

3. Polymères selon l'une des revendications 1 ou 2, caractérisés en ce que, le motif Zₐ d'isomérisation/ dimérisation représente un groupe de formules générales 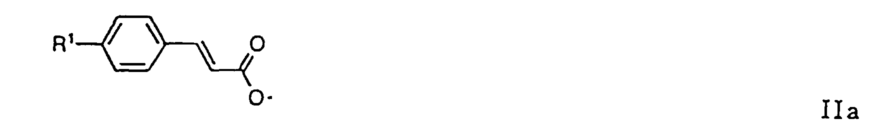 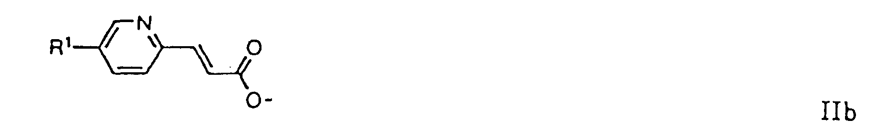 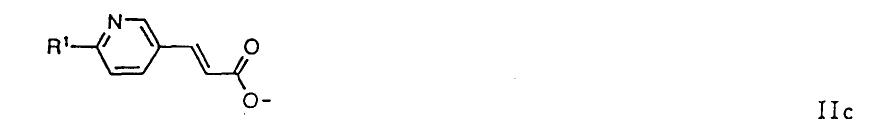 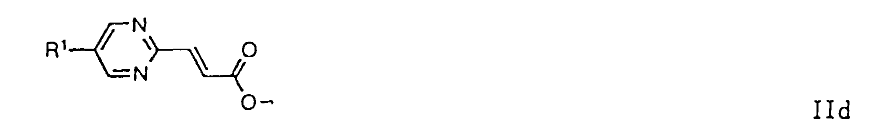 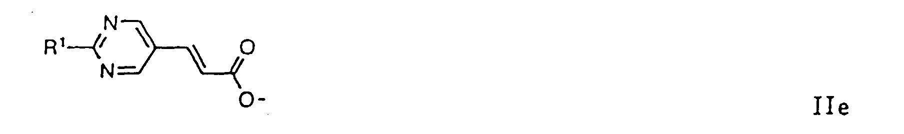 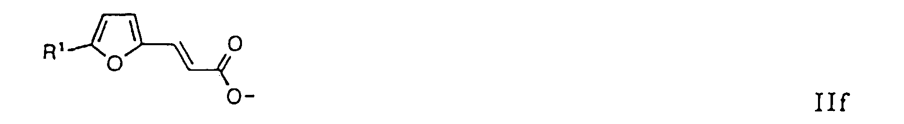 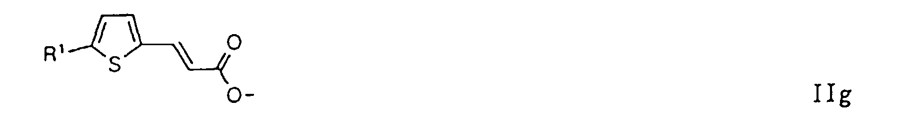 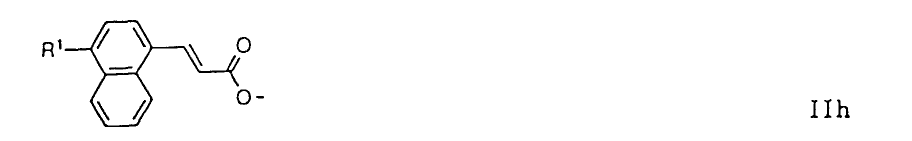 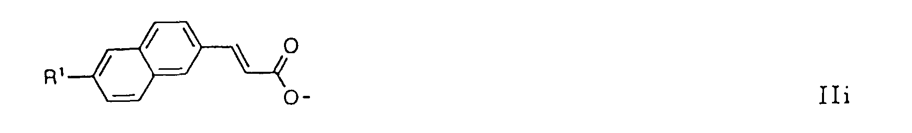 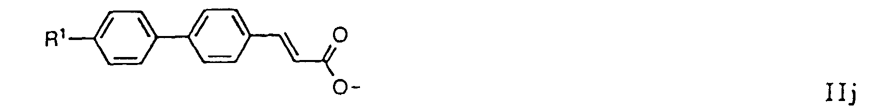 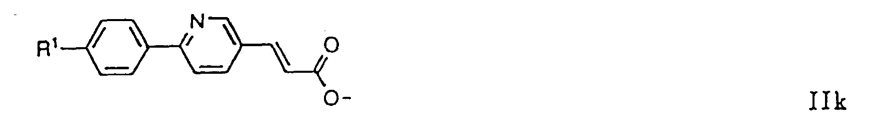 formules dans lesquelles R¹ représente un atome d'hydrogène, d'halogène, un groupe cyano, nitro, alkyle ou alcoxy avec 1 à 6 atomes de carbone.

4. Utilisation de polymères ou d'oligomères linéaires ou cycliques ayant un groupe éthène photoréactif selon l'une des revendications 1 à 3 comme couche d'orientation pour des cristaux liquides.
